# EUROPEAN PATENT APPLICATION

(11) **EP 4 801 107 A1**
(43) Date of publication of application: **02.09.2026**
(21) Application number: 24899565.6
(22) Date of filing: 11.11.2024
(51) Int. Cl.: H04W 28/08

(54) **COMMUNICATION METHOD, COMMUNICATION DEVICE, MEDIUM, AND PROGRAM PRODUCT**

(30) Priority: 04.12.2023 CN 202311665399
(71) Applicant: Huawei Technologies Co., Ltd., Shenzhen, Guangdong 518129 (CN)
(72) Inventor: FAN, Mingyang, Shenzhen, Guangdong 518129 (CN); LI, Yexing, Shenzhen, Guangdong 518129 (CN); YU, Yijun, Shenzhen, Guangdong 518129 (CN)
(74) Representative: Maiwald GmbH
(86) International application number: PCT/CN2024/131328
(87) International publication number: WO 2025/118923

(57) **Abstract**

Embodiments of this disclosure provide a communication method, a communication device, a computer-readable storage medium, and a computer program product. In the communication method, a network management device sends first request information to an NTN element management device. The first request information indicates a ground area and is used to request cell information. The cell information is information about an NTN cell that covers the ground area and that can take over load of a TN cell covering the ground area. The network management device receives first response information from the NTN element management device, where the first response information includes the cell information. Then, the network management device sends a request message to a TN element management device, where the request message indicates the information about the NTN cell. The TN element management device triggers migration of the load of the TN cell to the NTN cell based on the request message. In this manner, service load in a low-load area of a TN can be migrated to an NTN, so that more TN cells can be shut down, thereby improving a TN energy-saving amplitude.

## Description

This disclosure claims priority to Chinese Patent Application No. 202311665399.0, filed with the China National Intellectual Property Administration on December 4, 2023 and entitled "COMMUNICATION METHOD, COMMUNICATION DEVICE, MEDIUM, AND PROGRAM PRODUCT", which is incorporated herein by reference in its entirety.

### TECHNICAL FIELD

This disclosure generally relates to the communication field, and more specifically, to a communication method, a communication device, a computer-readable storage medium, and a computer program product.

### BACKGROUND

With reduction of satellite transmission costs and development of large-capacity communication satellite technologies, it is possible to provide wide-coverage wireless access by deploying large-scale communication satellites on a low earth orbit (Low Earth Orbit, LEO). Currently, various countries (for example, including the United States) have successfully deployed a plurality of low-orbit communication satellites, providing wireless access capabilities for satellite terminals covering major land and oceans around the world. Based on great potential of satellite wireless communication networks, to meet a vision of wide interconnection and full coverage of a 6th generation (6G), related standard organizations (such as the 3rd generation partnership project (3rd Generation Partnership Project, 3GPP) and the International Telecommunication Union-Telecommunication Standardization Sector (International Telecommunication Union-Telecommunication Standardization Sector, ITU-T)) vigorously promote a non-terrestrial network (Non-Terrestrial Network, NTN) protocol that supports direct connection of common mobile phone terminals to satellites. It can be expected that an NTN, especially a low earth orbit satellite communication network, is to play an important role in a future wide-coverage scenario. The NTN can collaborate with a terrestrial network (Terrestrial Network, TN) for a capability of building ubiquitous converged wireless access. However, there are still some problems to be resolved for building converged wireless access based on the NTN and the TN.

### SUMMARY

In view of this, embodiments of this disclosure provide a communication method, a communication device, a computer-readable storage medium, and a computer program product.

A first aspect of this disclosure provides a communication method. The method includes: sending first request information to a non-terrestrial network NTN element management device, where the first request information indicates a ground area and is used to request cell information, and the cell information is information about an NTN cell that covers the ground area and that can take over load of a terrestrial network TN cell covering the ground area; and receiving first response information from the NTN element management device, where the first response information includes the cell information. In this manner, service load in a low-load area of a TN can be migrated to an NTN, so that more TN cells can be shut down, thereby improving a TN energy-saving amplitude.

In some embodiments, the first request information further indicates a takeover time period. In this way, a calculation amount of the NTN element management device can be reduced, thereby improving efficiency.

In some embodiments, the cell information includes an identifier of the NTN cell. In this way, the NTN cell that can take over the load can be accurately indicated.

In some embodiments, the cell information further includes at least one of the following: a time period in which takeover can be performed, or a quantity of users who can be taken over. In this way, a status of the load that can be taken over by the NTN cell can be accurately indicated, to perform load migration more efficiently.

In some embodiments, the method further includes: after receiving the first response information, sending a request message to a TN element management device, where the request message includes the cell information and is used to request the TN element management device to trigger load migration. In this way, the information about the cell that can take over the load can be efficiently indicated to the TN element management device, thereby triggering load migration.

A valid request message includes second request information, where the second request information further indicates a migration area and a migration target, and the ground area is smaller than or equal to the migration area. In this way, the TN element management device can perform load migration based on sufficient information.

In some embodiments, the method further includes: before sending the first request information, sending third request information to the TN element management device, where the third request information indicates a migration area and a migration target, the third request information is used to request the TN element management device to determine migration assistance information associated with load that is expected to be migrated from the TN cell, and the ground area is smaller than or equal to the migration area; and receiving second response information from the TN element management device, where the second response information includes the migration assistance information, and the migration assistance information includes the ground area. In this way, based on a status of the load that needs to be migrated, the NTN element management device can be requested as required to determine the cell information.

In some embodiments, the migration assistance information further includes a takeover time period. In this way, a time period in which the load needs to be taken over can be accurately indicated.

In some embodiments, the request message includes fourth request information, and sending the request message includes: after receiving the first response information, sending the fourth request information to the TN element management device. In this way, after the cell information is obtained as required, the information about the cell that can take over the load can be effectively indicated to the TN element management device.

In some embodiments, the method further includes: receiving fifth request information from the NTN element management device, where the fifth request information is used to request to adjust load takeover for a first target ground area, and the first target ground area includes at least one of an overload area or an idle area. In this way, when load of the NTN element management device changes, load migration can be adjusted in time.

In some embodiments, the method further includes: sending sixth request information to the NTN element management device, where the sixth request information indicates an updated ground area and is used to request updated cell information, the updated cell information is information about an NTN cell that covers the updated ground area and that can take over load of a TN cell covering the updated ground area, and the updated ground area is smaller than or equal to the first target ground area; and receiving third response information from the NTN element management device, where the third response information includes the updated cell information. In this way, when the load of the NTN element management device changes, the information about the cell that can take over the load can be obtained in time.

In some embodiments, the updated cell information includes an identifier of an updated NTN cell. Therefore, the cell that can take over the load after the load changes can be accurately indicated.

In some embodiments, the updated cell information further includes at least one of the following: an updated time period in which takeover can be performed, or an updated quantity of users who can be taken over. In this way, other information about the load that can be taken over after the load changes can be accurately indicated, to perform load migration more efficiently.

In some embodiments, the method further includes: sending seventh request information to the TN element management device based on the third response information, where the seventh request information indicates an updated migration area, an updated migration target, and the updated cell information, and the seventh request information is used to re-request the TN element management device to trigger load migration. In this way, a change of the load migration can be indicated to the TN element management device in time.

In some embodiments, the method further includes: receiving eighth request information from the NTN element management device, where the eighth request information is used to request to stop load takeover for a second target ground area. In this way, when the NTN element management device needs to stop taking over the load, the load migration can be adjusted in time.

In some embodiments, the method further includes: sending ninth request information to the TN element management device based on the eighth request information, where the ninth request information is used to request to stop load migration for the second target ground area. In this way, stop of the load migration can be indicated to the TN element management device in time.

A second aspect of this disclosure provides a communication method. The method includes: receiving first request information from a network management device, where the first request information indicates a ground area and is used to request cell information, and the cell information is information about a non-terrestrial network NTN cell that covers the ground area and that can take over load of a terrestrial network TN cell covering the ground area; and sending first response information to the network management device, where the first response information includes the cell information. In this manner, service load in a low-load area of a TN can be migrated to an NTN, so that more TN cells can be shut down, thereby improving a TN energy-saving amplitude.

In some embodiments, the first request information further indicates a takeover time period. In this way, a calculation amount of an NTN element management device can be reduced, thereby improving efficiency.

In some embodiments, the cell information includes an identifier of the NTN cell. In this way, the NTN cell that can take over the load can be accurately indicated.

In some embodiments, the cell information further includes at least one of the following: a time period in which takeover can be performed, or a quantity of users who can be taken over. In this way, a status of the load that can be taken over by the NTN cell can be accurately indicated, to perform load migration more efficiently.

In some embodiments, the method further includes: sending fifth request information to the network management device, where the fifth request information is used to request to adjust load takeover for a first target ground area, and the first target ground area includes at least one of an overload area or an idle area. In this way, when load of the NTN element management device changes, load migration can be adjusted in time.

In some embodiments, sending the fifth request information includes at least one of the following: when the first target ground area includes the overload area, determining, based on the overload area, that load of the NTN cell is grater than a first threshold, and sending the fifth request information to the network management device; or when the first target ground area includes the idle area, determining, based on the idle area, that the load of the NTN cell is less than a second threshold, and sending the fifth request information to the network management device. In this way, when the load or idleness is effectively determined, a request message can be initiated in time.

In some embodiments, the method further includes: receiving sixth request information from the network management device, where the sixth request information indicates an updated ground area and is used to request updated cell information, the updated cell information is information about an NTN cell that covers the updated ground area and that can take over load of a TN cell covering the updated ground area, and the updated ground area is smaller than or equal to the first target ground area; and sending third response information to the network management device, where the third response information includes the updated cell information.

In some embodiments, the updated cell information includes an identifier of an updated NTN cell. Therefore, the cell that can take over the load after the load changes can be accurately indicated.

In some embodiments, the updated cell information further includes at least one of the following: an updated time period in which takeover can be performed, or an updated quantity of users who can be taken over. In this way, other information about the load that can be taken over after the load changes can be accurately indicated, to perform load migration more efficiently.

In some embodiments, the method further includes: sending eighth request information to the network management device, where the eighth request information is used to request to stop load takeover for a second target ground area. In this way, when the NTN element management device needs to stop taking over the load, the load migration can be adjusted in time.

A third aspect of this disclosure provides a communication method. The method includes: receiving a request message from a network management device, where the request message includes cell information and is used to request a TN element management device to trigger load migration, and the cell information is information about an NTN cell that covers a ground area and that can take over load of a terrestrial network TN cell covering the ground area; and triggering migration of the load of the TN cell to the NTN cell based on the request message. In this manner, service load in a low-load area of a TN can be migrated to an NTN, so that more TN cells can be shut down, thereby improving a TN energy-saving amplitude.

In some embodiments, the cell information further includes at least one of the following: a time period in which takeover can be performed, or a quantity of users who can be taken over. In this way, a status of the load that can be taken over by the NTN cell can be accurately indicated, to perform load migration more efficiently.

In some embodiments, the request message includes second request information, where the second request information further indicates a migration area and a migration target, and the ground area is smaller than or equal to the migration area. In this way, the TN element management device can perform load migration based on sufficient information.

In some embodiments, the method further includes: before receiving the request message, receiving third request information from the network management device, where the third request information indicates a migration area and a migration target, the third request information is used to request the TN element management device to determine migration assistance information associated with load that is expected to be migrated from the TN cell, and the ground area is smaller than or equal to the migration area; determining, based on determining of the load that is expected to be migrated from the TN cell, an area from which migration is expected to be performed as the ground area; and sending second response information to the network management device, where the second response information includes the migration assistance information, and the migration assistance information includes the ground area. In this way, based on a status of the load that needs to be migrated, the NTN element management device can be requested as required to determine the cell information.

In some embodiments, the migration assistance information further includes a takeover time period. In this way, a time period in which the load needs to be taken over can be accurately indicated.

In some embodiments, receiving the request message includes: after sending the second response information, receiving fourth request information from the network management device, where the fourth request information indicates an identifier of the NTN cell, and the fourth request information is used to request the TN element management device to trigger load migration. In this way, after the cell information is obtained as required, the information about the cell that can take over the load can be effectively indicated to the TN element management device.

In some embodiments, causing the migration of the load of the TN cell to the NTN cell includes: determining a target TN cell that is in the TN cell and for which one or more NTN cells in the NTN cell are configured as a neighboring cell; determining a quantity of users of the target TN cell in a target takeover time period based on historical load of the target TN cell; determining a plurality of candidate migration solutions in which load of the target TN cell can be migrated to the NTN cell, where the plurality of candidate migration solutions satisfy that the quantity of users of the target TN cell in the target takeover time period is less than or equal to a quantity of users who can be migrated to the one or more NTN cells in the NTN cell; and selecting a target migration solution from the plurality of candidate migration solutions based on migration benefits corresponding to the plurality of candidate migration solutions. In this way, appropriate load migration can be effectively implemented.

In some embodiments, the method further includes: receiving seventh request information from the network management device, where the seventh request information indicates an updated migration area, an updated migration target, and the updated cell information, and the seventh request information is used to re-request the TN element management device to trigger load migration; and re-determining a migration solution based on the seventh request information. In this way, a change of the load migration can be indicated to the TN element management device in time, so that the TN element management device can change, in time, the load migration that is to the NTN cell.

In some embodiments, the updated cell information includes an identifier of an updated NTN cell. Therefore, the cell that can take over the load after the load changes can be accurately indicated.

In some embodiments, the updated cell information further includes at least one of the following: an updated time period in which takeover can be performed, or an updated quantity of users who can be taken over. In this way, other information about the load that can be taken over after the load changes can be accurately indicated, to perform load migration more efficiently.

In some embodiments, the method further includes: receiving ninth request information from the network management device, where the ninth request information is used to request to stop load migration for a second target ground area; and re-determining a migration solution based on the ninth request information. In this way, stop of the load migration can be indicated to the TN element management device in time, so that the TN element management device can stop, in time, the load migration that is to the NTN cell.

A fourth aspect of this disclosure provides a communication device. The communication device includes a processor and a memory that stores instructions. When the instructions are executed by the processor, the communication device is enabled to perform any method according to any one of the first aspect to the third aspect and the implementations thereof.

A fifth aspect of this disclosure provides a computer-readable storage medium. The computer-readable storage medium stores instructions; and when the instructions are executed by a communication device, the communication device is enabled to perform any method according to any one of the first aspect to the third aspect and the implementations thereof.

A sixth aspect of this disclosure provides a computer program product. The computer program product includes instructions; and when the instructions are executed by a communication device, the communication device is enabled to perform any method according to any one of the first aspect to the third aspect and the implementations thereof.

A seventh aspect of this disclosure provides a chip. The chip includes a processing circuit, and the processing circuit is configured to perform any method according to any one of the first aspect to the third aspect and the implementations thereof.

It should be understood that the content described in the summary is not intended to limit key or important features of embodiments of this disclosure, nor to limit the scope of this disclosure. The following descriptions facilitate understanding of other features of embodiments of this disclosure.

### BRIEF DESCRIPTION OF DRAWINGS

FIG. 1 is a diagram of a communication system in which an embodiment of this disclosure may be implemented;
FIG. 2 is an interaction signaling diagram of a first communication process according to an embodiment of this disclosure;
FIG. 3 is an interaction signaling diagram of a second communication process according to an embodiment of this disclosure;
FIG. 4 is an interaction signaling diagram of a third communication process according to an embodiment of this disclosure;
FIG. 5 is an interaction signaling diagram of a fourth communication process according to an embodiment of this disclosure;
FIG. 6 is an interaction signaling diagram of a fifth communication process according to an embodiment of this disclosure;
FIG. 7 is an interaction signaling diagram of a sixth communication process according to an embodiment of this disclosure;
FIG. 8 shows a first example process according to an embodiment of this disclosure;
FIG. 9 shows a second example process according to an embodiment of this disclosure;
FIG. 10 shows a third example process according to an embodiment of this disclosure;
FIG. 11 shows a fourth example process according to an embodiment of this disclosure;
FIG. 12 shows a fifth example process according to an embodiment of this disclosure;
FIG. 13 and FIG. 14 show example system architectures and module implementations according to embodiments of this disclosure;
FIG. 15 is a schematic flowchart of a method implemented on a network management device according to an embodiment of this disclosure;
FIG. 16 is a schematic flowchart of a method implemented on an NTN element management device according to an embodiment of this disclosure;
FIG. 17 is a schematic flowchart of a method implemented on a TN element management device according to an embodiment of this disclosure;
FIG. 18 is a block diagram of a first communication apparatus according to some embodiments of this application;
FIG. 19 is a block diagram of a second communication apparatus according to some embodiments of this application;
FIG. 20 is a block diagram of a third communication apparatus according to some embodiments of this application; and
FIG. 21 is a block diagram of an example communication device that may be used to implement an embodiment of this disclosure.

Throughout all the accompanying drawings, same or similar reference numerals represent same or similar components.

### DESCRIPTION OF EMBODIMENTS

Embodiments of this disclosure are described in more detail in the following with reference to the accompanying drawings. Although some embodiments of this disclosure are shown in the accompanying drawings, it should be understood that embodiments of this disclosure can be implemented in various forms, and should not be construed as being limited to embodiments described herein, and instead, these embodiments are provided for a more thorough and complete understanding of this disclosure. It should be understood that the accompanying drawings and embodiments of this disclosure are used as examples and are not intended to limit the protection scope of this disclosure.

In the descriptions of embodiments of this disclosure, the term "including" and similar terms thereof shall be understood as non-exclusive inclusion, that is, "including but not limited to". The term "based on" should be understood as "at least partially based on". The term "an embodiment" or "this embodiment" should be understood as "at least one embodiment". The terms "first", "second", and the like may indicate different objects or a same object. Other explicit and implicit definitions may also be included below.

Embodiments of this disclosure may be implemented based on any proper communication protocol, including but not limited to cellular communication protocols such as 3rd generation (3rd Generation, 3G), 4th generation (4G), 5th generation (5G), and future communication protocols (for example, 6G), wireless local area network communication protocols such as the Institute of Electrical and Electronics Engineers (Institute of Electrical and Electronics Engineers, IEEE) 802.11, and/or any other protocols currently known or to be developed in the future.

Technical solutions in embodiments of this disclosure are applied to a communication system that complies with any proper communication protocol, for example, a general packet radio service (General Packet Radio Service, GPRS) system, a global system for mobile communications (Global System for Mobile Communications, GSM), an enhanced data rate for GSM evolution (Enhanced Data rate for GSM Evolution, EDGE) system, a universal mobile telecommunications system (Universal Mobile Telecommunications System, UMTS), a long term evolution (Long Term Evolution, LTE) system, a wideband code division multiple access (Wideband Code Division Multiple Access, WCDMA) system, a code division multiple access 2000 (Code Division Multiple Access 2000, CDMA2000) system, a time division-synchronous code division multiple access (Time Division-Synchronous Code Division Multiple Access, TD-SCDMA) system, a frequency division duplex (Frequency Division Duplex, FDD) system, a time division duplex (Time Division Duplex, TDD) system, a 5th generation (5G) system (for example, new radio (New Radio, NR)), and a future communication system (for example, a 6G system).

It should be understood that embodiments of this disclosure may be applied to any communication system with a similar problem, for example, a wireless local area network (WLAN), a wired communication system, or another communication system to be developed in the future.

The term "terminal" or "terminal device" used in this disclosure refers to any terminal device that can perform wired or wireless communication with a network device or terminal devices that can perform wired or wireless communication with each other. The terminal device may be sometimes referred to as user equipment (User Equipment, UE). The terminal device may be any type of mobile terminal, fixed terminal, or portable terminal. The terminal device may be various wireless communication devices that have a wireless communication function. With emergence of an Internet of Things (Internet of Things, IoT) technology, more devices that previously have no communication function, for example, but not limited to, a household appliance, a transportation tool, a tool device, a service device, and a service facility, start to obtain a wireless communication function by being configured with a wireless communication unit, so as to access a wireless communication network, and accept remote control. Such a device has the wireless communication function as the device is configured with the wireless communication unit, and is therefore classified as a wireless communication device. For example, the terminal device may include a mobile cellular phone, a cordless phone, a mobile terminal (Mobile Terminal, MT), a mobile station, a mobile device, a wireless terminal, a handheld device, a client, a subscription station, a portable subscription station, an Internet node, a communicator, a desktop computer, a laptop computer, a notebook computer, a tablet computer, a personal communication system device, a personal navigation device, a personal digital assistant (Personal Digital Assistant, PDA), a wireless data card, a wireless modulator demodulator (Modulator demodulator, Modem), a positioning device, a radio broadcast receiver, an e-book device, a game device, an Internet of Things (Internet of Things, IoT) device, a vehicle-mounted device, an aircraft, a virtual reality (Virtual Reality, VR) device, an augmented reality (Augmented Reality, AR) device, a wearable device (for example, a smart watch), a terminal device in a 5G network or any terminal device in an evolved public land mobile network (Public Land Mobile Network, PLMN), another device that can be used for communication, or any combination thereof. This is not limited in embodiments of this disclosure.

The term "network node" or "network device" used in this disclosure is an entity or a node that may be configured to communicate with a terminal device, for example, may be an access network device. The access network device may be an apparatus that is deployed in a radio access network and that provides a wireless communication function for a mobile terminal. For example, the access network device may be a radio access network (Radio Access Network, RAN) network device. The access network device may include various types of base stations. The base station is configured to provide a radio access service for the terminal device. Specifically, each base station corresponds to a service coverage area, and a terminal device entering the area may communicate with the base station through a radio signal, to receive the radio access service provided by the base station. Service coverage areas of the base stations may overlap, and a terminal device in an overlapping area may receive radio signals from a plurality of base stations. Therefore, the plurality of base stations may all provide services for the terminal device. Based on sizes of provided service coverage areas, the access network device may include a macro base station providing a macro cell (Macro cell), a micro base station providing a micro cell (Pico cell), a pico base station providing a pico cell, and a femto base station providing a femto cell (Femto cell). In addition, the access network device may further include various forms of relay stations, access points, radio units (Radio Unit, RU), remote radio units (Remote Radio Unit, RRU), radio heads (Radio Head, RH), remote radio heads (Remote Radio Head, RRH), and the like. In systems using different radio access technologies, the access network device may have different names. For example, the access network device is referred to as an evolved NodeB (evolved NodeB, eNB or eNodeB) in a long term evolution system network, is referred to as a NodeB (NodeB, NB) in a 3G network, may be referred to as a gNodeB (gNB) or an NR NodeB (NR NB) in a 5G network, or the like. In some scenarios, the access network device may include a central unit (Central Unit, CU) and/or a distributed unit (Distributed Unit, DU). The CU and the DU may be deployed in different places. For example, the DU is remotely deployed in a high-traffic area, and the CU is deployed in a central equipment room. Alternatively, the CU and the DU may be deployed in a same equipment room. The CU and the DU may alternatively be different components in a same rack. In different systems, the CU (or a CU-control plane (Control Plane, CP) and a CU-user plane (User Plane, UP)), the DU, or the RU may also have different names, but a person skilled in the art may understand meanings of the names. For example, in an open radio access network (open RAN, O-RAN or ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in embodiments of this application. Any one of the CU (or the CU-CP or the CU-UP), the DU, and the RU in embodiments of this application may be implemented using a software module, a hardware module, or a combination of the software module and the hardware module. For ease of description, in subsequent embodiments of this disclosure, the foregoing apparatuses that provide the wireless communication function for the mobile terminal are collectively referred to as a network device. This is not specifically limited in embodiments of this disclosure.

3GPP defines a non-TN (NTN) architecture for 5.5th generation (5.5G)/6G evolution. Base stations deployed on satellites transmit radio signals to TN user terminals (including mobile phones, IoT terminals, and the like) to provide wireless access capabilities. Commercial TN terminals can access an NTN and switch between the NTN and a TN.

In addition, as described above, with the reduction of satellite transmission costs and the development of large-capacity communication satellite technology, it is possible to provide wide-coverage wireless access by deploying large-scale communication satellites on an LEO. For example, since large-scale deployment of low-orbit communication satellite constellations in 2019, the US satellite operator S has successfully deployed more than 4,000 low-orbit communication satellites by the beginning of 2023, providing wireless access capabilities for satellite terminals covering major land and oceans around the world. Based on great potential of satellite wireless communication networks, to meet a vision of wide interconnection and full coverage of 6G, related standard organizations (such as the 3GPP and the ITU-T) vigorously promote an NTN protocol that supports direct connection of common mobile phone terminals to satellites. For example, Release 17 (R17) of the 3GPP completed formulation of an overall NTN architecture, service requirements, basic air interface access, and mobility protocols in 2022. In April 2023, some TN operators also announced success in an experiment of using commercial mobile phones to directly connect to low-orbit satellites based on the NTN protocol to implement bidirectional voice communication. It can be expected that the NTN, especially a low-orbit satellite communication network, is to play an important role in a future wide-coverage scenario. The NTN can collaborate with the TN for a capability of building ubiquitous converged wireless access.

In addition, since the Industrial Revolution, the impact of human activities on the global environment, especially climate, has been expanding in scope and extent. To cope with the impact of global climate change, countries have continued to propose action plans for carbon peaking and carbon neutrality. The telecommunications industry consumes a large amount of energy, and a network device is a large part of the energy consumption. Telecommunications operators, in terms of social responsibility and regulation compliance for sustainable development, take energy saving and emission reduction as an important strategy and attempt to reduce energy consumption and carbon dioxide emissions during network operation.

In recent years, with emergence of new services such as network streaming media, extended reality (Extended Reality, XR), remote office, and online courses, wireless communication technologies gradually evolve to the 5.5th generation (5.5G) and 6G to meet users' requirements for wireless communication coverage and quality improvement. Operators are continuously increasing coverage and capacity of wireless networks, and the energy consumption and carbon emission are expected to increase, which poses challenges to achievement of dual carbon goals.

With continuous increase of energy consumption of operators' networks, main equipment (namely, wireless base stations) attracts main attention for achieving energy saving. Energy consumption of main equipment of wireless sites is focused on greatly. Energy consumption of wireless sites of a typical operator accounts for about 45% of total energy consumption, and energy consumption of main equipment of the wireless sites accounts for 50% of the energy consumption of the wireless sites. In the energy consumption of the wireless base stations, a radio frequency unit (Remote Radio Unit, RRU) accounts for a large proportion. In most cases, a traffic volume on a real network has definite tidal effect, and the traffic volume on the network varies greatly during peak hours and off-peak hours. When the traffic volume is low, the RRU of the base stations is still running, and the energy consumption is not dynamically adjusted based on the traffic volume, which causes a great waste of energy.

Therefore, reducing ineffective energy consumption is a main direction of energy saving. Currently, a mainstream energy-saving technology uses an artificial intelligence (Artificial Intelligence, AI) algorithm to automatically identify a co-coverage relationship between wireless base stations, analyze service load of each base station, predict peak and off-peak hours of each station, and control, based on service load changes, base stations to coordinate to save energy. During network off-peak hours, a quantity of active users is small and the traffic volume is low. In this case, RRUs of large-capacity base stations can be disabled, and only common-capacity base stations with same coverage can run with low power consumption. In addition, users are migrated to the common-capacity base stations to provide basic radio access capabilities. During network peak hours, the quantity of active users is large and the traffic volume is high. However, the users or traffic are unevenly distributed geographically. In this case, large-capacity base stations in hotspot areas are selectively enabled to absorb traffic, while large-capacity base stations in non-hotspot areas operate with low power consumption, and only a part of RRUs are enabled to provide radio access capabilities that adapt to service load.

In an energy-saving policy, an energy-saving service consumer sends a network energy-saving request to an energy-saving service producer, and specifies a network geographic coverage area that requires energy saving and a target of network energy consumption. After receiving the request, the energy-saving service producer analyzes energy consumption and load of wireless base station devices in the specified network geographic coverage area, identifies physical base stations having a co-coverage relationship and a service load change feature of each base station in the area, predicts peak and off-peak time periods of each base station, generates and delivers an energy-saving policy of each base station, monitors energy consumption changes after the delivery, and reports a network energy-saving result to the energy-saving service consumer.

However, during network energy saving, due to a requirement for basic coverage of wireless networks, a cell that provides a basic access capability needs to be reserved in a time period or a geographical area in which a service volume is low or even there is no service. As a result, not all corresponding cells can be shut down (consequently, corresponding base stations cannot be disabled), and only a part of the corresponding cells can be shut down. Consequently, the network energy consumption (for example, electric quantities consumed in a measurement time period) is reduced by a limited extent, and energy efficiency (for example, determined by dividing service traffic in the measurement time period by the electric quantities consumed) is also low. Therefore, an effective network energy-saving manner is required.

In view of the foregoing analysis and research, embodiments of this disclosure provide a communication method. In the method, a network management device sends first request information to an NTN element management device. The first request information indicates a ground area and is used to request cell information. The cell information is information about an NTN cell that covers the ground area and that can take over load of a TN cell covering the ground area. The network management device receives first response information from the NTN element management device, where the first response information includes the cell information. Then, the network management device sends a request message to a TN element management device, where the request message indicates information about the NTN cell. The TN element management device triggers migration of the load of the TN cell to the NTN cell based on the request message.

In this manner, service load in a low-load area of a TN can be migrated to an NTN, so that more TN cells can be shut down, thereby improving a TN energy-saving amplitude. In addition, wide coverage and green energy advantages of an NTN can be used to improve overall energy efficiency of a non-terrestrial-terrestrial three-dimensional network.

The following further describes in detail embodiments of this application with reference to accompanying drawings. Specific operation methods, function descriptions, and the like in method embodiments may also be applied to apparatus embodiments or system embodiments.

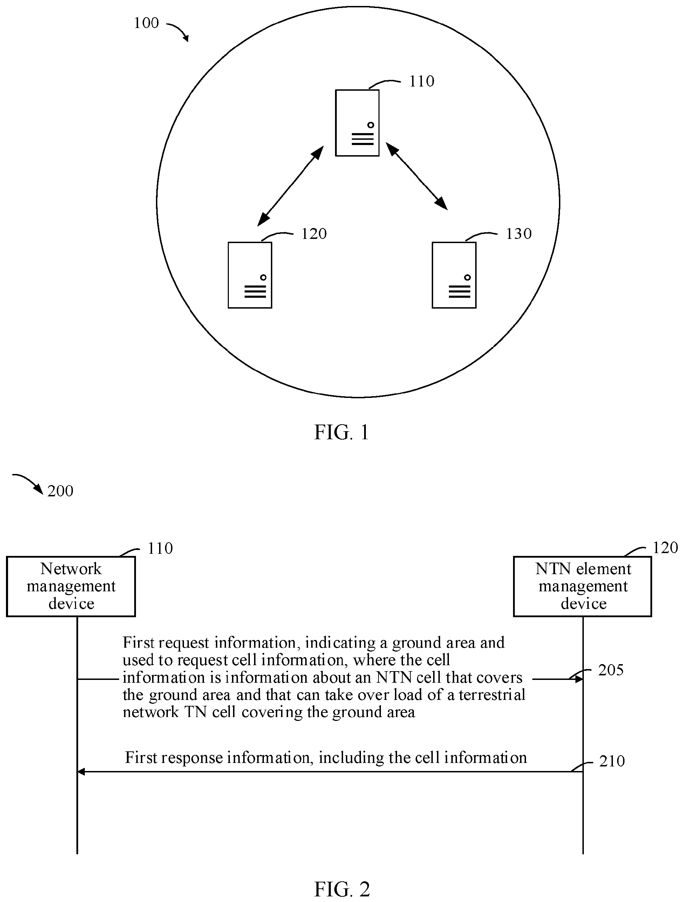

FIG. 1 is a diagram of a communication system 100 in which an embodiment of this disclosure may be implemented. As shown in FIG. 1, the system 100 may include the following.

In some embodiments, as shown in FIG. 1, the communication system 100 may include a network management device 110, an NTN element management device 120, and a TN element management device 130. In some embodiments, the network management device 110 may include a network management system (network management system, NMS), the NTN element management device 120 may include an NTN element management system (element management system, EMS) EMS 120, and the TN element management device 130 may include a TN EMS 130. The network management device 110, the NTN element management device 120, and the TN element management device 130 may directly communicate with each other or indirectly communicate with each other via another device. The network management device 110, the NTN element management device 120, and the TN element management device 130 may be implemented using hardware, software, or a combination of hardware and software.

It should be understood that a quantity of components and connections between the devices shown in FIG. 1 are provided for a purpose of illustration, and constitute no limitation. The communication system 100 may include any appropriate quantity of devices and networks appropriate for implementing embodiments of this specification. In addition, it should be understood that the communication system 100 shown in FIG. 1 is an example, and embodiments of this disclosure may also be applied to another scenario. Furthermore, it should also be understood that communication between the foregoing devices in the communication system 100 may comply with any appropriate communication technology and a corresponding communication standard.

FIG. 2 is an interaction signaling diagram of a first communication process 200 according to an embodiment of this disclosure. For clarity of description without any limitation, the process 200 is described with reference to FIG. 1. FIG. 2 relates to the network management device 110 and the NTN element management device 120.

As shown in FIG. 2, in 205, the network management device 110 sends first request information to the NTN element management device 120. The first request information may indicate a ground area and is used to request cell information. The ground area may be an area in which load migration needs to be performed to implement energy saving. The ground area may include, for example, one or more polygonal areas (in longitude and latitude) or subnets. The cell information is information about an NTN cell (for example, an NTN cell list) that covers the ground area and that can take over load of a TN cell covering the ground area. The NTN cell list may refer to a list of NTN cells that can take over TN load. For example, the NTN cell list may include {cell id1, cell id2}. Optionally or additionally, the first request information may further indicate a takeover time period (for example, a takeover time period list). The takeover time period may be one or more start-stop time periods, and may be periodic. An example of the takeover time period may include {[time period 1, cycle 1], [time period 2, cycle 2]}; a time period: 00:00-06:30; or a cycle: every day/every Monday. For example, the cell information may include an identifier of the NTN cell. Alternatively or additionally, the cell information may further include one or both of a time period in which takeover can be performed (for example, a list of time periods in which takeover can be performed) or a quantity of users who can be taken over (for example, a list of quantities of users who can be taken over). The quantity of users who can be taken over may be a quantity of users who can be taken over by a corresponding NTN cell in a specified time period. For example, an example of the quantity of users who can be taken over may include {500, 300}.

The NTN element management device 120 may perform load estimation and calculation based on the received first request information. For example, the NTN element management device 120 may calculate a satellite moving route based on a satellite ephemeris, and calculate beam projection of a satellite on the ground by using a satellite antenna model, an atmospheric propagation model, and the like, to determine the NTN cell that can cover the ground area in the takeover time period. For example, the NTN cell list may be determined. If the first request information does not include the takeover time period, in an example, an NTN cell (for example, an NTN cell list) that covers the ground area in any time period during a whole day can be determined. The NTN element management device 120 may analyze historical key performance indicator (Key Performance Indicator, KPI) data of a wireless service in the ground area, and predict a quantity (e) of users in each future time period (for example, the takeover time period). An estimated quantity (s) of users who can be taken over by the NTN cell in each future time period is obtained by subtracting the predicted quantity (e) of users from a total quantity (max) of users who can access the NTN cell. For example, s>0 may indicate that the corresponding NTN cell is idle in such a time period, and may take over load of a user served by the TN cell.

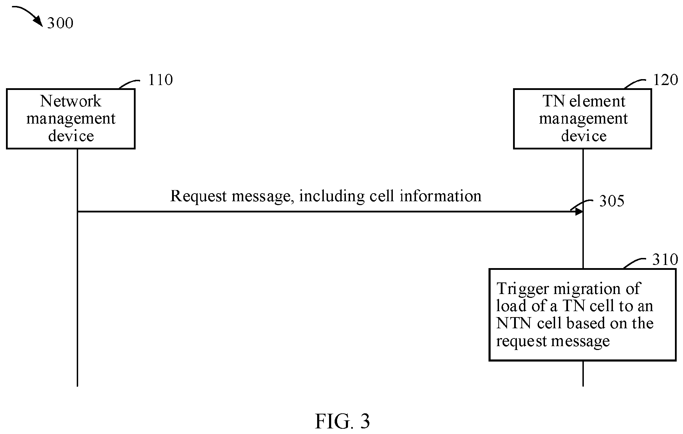

As shown in FIG. 2, in 210, the NTN element management device 120 sends first response information to the network management device 110. The first response information may include the cell information. Then, the NTN element management device 120 may indicate the cell information to the TN element management device 130. The following describes interaction between the network management device 110 and the TN element management device 130 with reference to FIG. 3.

FIG. 3 is an interaction signaling diagram of a second communication process 300 according to an embodiment of this disclosure. For clarity of description without any limitation, the process 300 is described with reference to FIG. 1. FIG. 3 relates to the network management device 110 and the TN element management device 130.

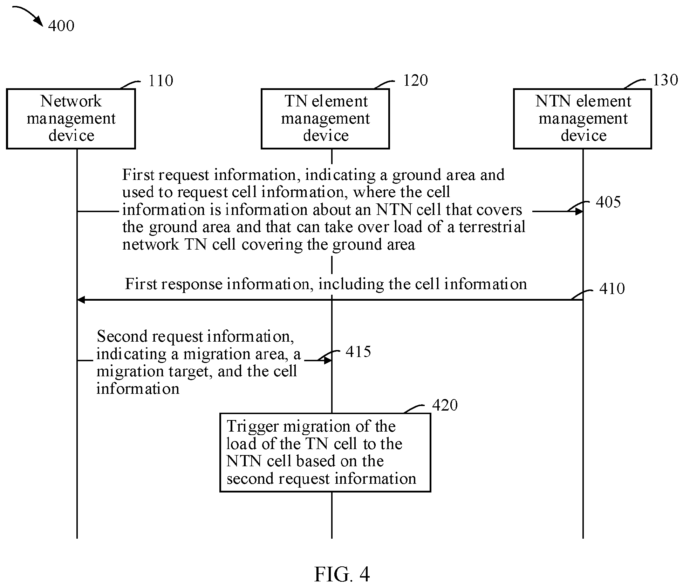

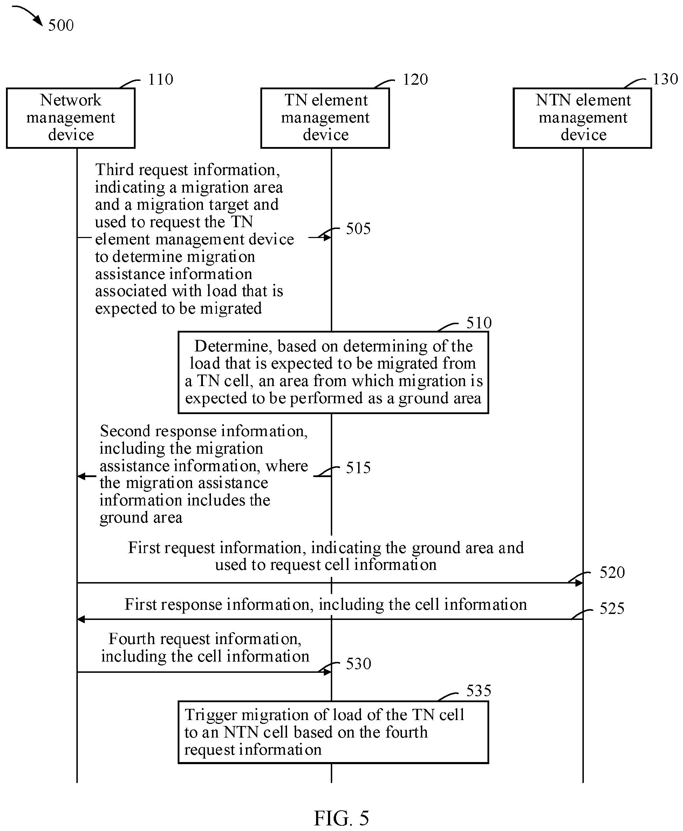

As shown in FIG. 3, in 305, the network management device 110 sends a request message to the TN element management device 130, to request the TN element management device 130 to trigger load migration. The request message includes the foregoing cell information, that is, includes information about an NTN cell that takes over load of a TN cell covering a ground area, and optionally includes one or both of a takeover time period or a quantity of users who can be taken over. Content included in the request message and sending timing may be implemented in different manners, and are described below with reference to FIG. 4 and FIG. 5.

Then, in 310, the TN element management device 130 triggers migration of the load of the TN cell to the NTN cell based on the request message. In some embodiments, the TN element management device 130 may analyze a neighboring cell relationship of the TN cell, to determine a target TN cell of the TN cell that configures one or more NTN cells in the NTN cell as a neighboring cell. The determined target TN cell may migrate load to the one or more corresponding NTN cells. The TN element management device 130 may analyze historical load (for example, historical user load) of the determined target TN cell. Then, the TN element management device 130 may determine a quantity of users of the target TN cell in a target takeover time period based on the historical load of the target TN cell. For example, if a time period in which takeover can be performed is indicated, the TN element management device 130 may predict a quantity of users in the time period in which takeover can be performed; or if the time period in which takeover can be performed is not indicated, the TN element management device 130 may predict a quantity of users in each time period of a whole day. Based on the foregoing prediction, the TN element management device 130 may determine a plurality of candidate migration solutions in which the load of the target TN cell can be migrated to the NTN cell. The plurality of candidate migration solutions may satisfy that the quantity of users of the target TN cell in the target takeover time period is less than or equal to a quantity of users who can be migrated to the one or more NTN cells in the NTN cell The TN element management device 130 may determine migration benefits corresponding to the plurality of candidate migration solutions. The migration benefit may be, for example, determined as follows: "Power consumption of TN cells per unit duration (for example, electric quantity consumption per hour)* shutdown duration" to obtain total power consumption through calculation. For example, if the quantity of users who can be taken over by the NTN cell is not provided, calculation may be performed based on a pre-agreed fixed estimated quantity of users who can be taken over by each NTN cell. For example, it is agreed that each NTN cell can take over 1,000 users. Based on the migration benefits (or referred to as energy-saving benefits) corresponding to the plurality of candidate migration solutions, the TN element management device 130 may select a target migration solution from the foregoing plurality of candidate migration solutions. For example, the target migration solution may be a migration solution with a largest migration benefit in the plurality of candidate migration solutions. In other words, the TN element management device 130 may select different TN cell combinations, to generate a plurality of solutions in which target TN cells can be completely shut down and a constraint "Total quantity of users who need to be migrated from the target TN cells ≤ Estimated quantity of users who can be taken over by a corresponding NTN cell" is satisfied. Then, the TN element management device 130 may select a solution with a largest migration benefit for a TN base station from the plurality of solutions.

In some embodiments, the TN element management device 130 may deliver an energy-saving shutdown request to a TN base station of a TN cell in the determined migration solution. The request, for example, may include a TN cell that can be shut down, a target NTN cell to which load can be migrated, and a shutdown time period. The TN base station may correspondingly execute an energy-saving solution. For example, users may be migrated by using a user switching signaling protocol defined in the 3GPP. The users are migrated to the corresponding NTN cell in the foregoing specified shutdown time period, then the TN cell is shut down, and an energy-saving result is collected and sent to the TN element management device 130. The element management device 130 may collect an energy-saving result of each TN base station, and generate an energy-saving result of the ground area to send the energy-saving result to the network management device 110.

The following respectively describes two implementations of the process 300 with reference to FIG. 4 and FIG. 5. FIG. 4 is an interaction signaling diagram of a third communication process 400 according to an embodiment of this disclosure, and FIG. 5 is an interaction signaling diagram of a fourth communication process 500 according to an embodiment of this disclosure. For clarity of description without any limitation, the processes 400 and 500 are described with reference to FIG. 1. FIG. 4 and FIG. 5 relate to the network management device 110, the NTN element management device 120, and the TN element management device 130.

As shown in FIG. 4, in 405, the network management device 110 sends, to the NTN element management device 120, a first request message used to request cell information. In 410, the NTN element management device 120 sends, to the network management device 110, a first response message including the cell information. In 415, the network management device 110 sends second request information (in this example, a request message may be referred to as the second request information) to the TN element management device 130. The second request information may indicate a migration area, a migration target, and the foregoing cell information. A ground area may be smaller than or equal to the migration area. Then, in 420, the TN element management device 130 may trigger migration of load of a TN cell to an NTN cell based on the second request information.

In this manner, the TN element management device 130 can migrate, based on the cell information provided by the network management device 110 and when a migration solution is generated, at least a part of the TN load to the NTN cell and then shut down the TN cell, thereby improving a TN energy-saving amplitude.

Optionally or additionally, before requesting cell information from the NTN element management device 120, the network management device 110 may first request the TN element management device 130 to determine migration assistance information associated with load that is expected to be migrated from a TN cell. As shown in FIG. 5, in 505, the network management device 110 sends third request information to the TN element management device 130, to request the TN element management device 130 to determine migration assistance information associated with the load that is expected to be migrated from the TN cell. The third request information may indicate a migration area (or referred to as an energy-saving area) and a migration target (or referred to as an energy-saving target). The TN element management device 130 may perform energy-saving optimization, analyze historical user load of the TN cell, and estimate the load that is expected to be migrated from the TN cell. In 510, the TN element management device 130 may determine, based on determining of the load that is expected to be migrated from the TN cell, an area from which migration is expected to be performed as a ground area. In 515, the TN element management device 130 may send second response information to the network management device 110, where the second response information may include the migration assistance information. In addition to indicating the ground area from which the load is to be migrated, the migration assistance information may further indicate an expected takeover time period. Then, in 520, the network management device 110 sends, to the NTN element management device 120, a first request message used to request the cell information. In 525, the NTN element management device 120 sends, to the network management device 110, a first response message including the cell information. After receiving the first response message, in 530, the network management device 110 sends fourth request information (in this example, a request message may be referred to as the fourth request information) to the TN element management device 130. The fourth request information may include the foregoing cell information. Then, in 535, the TN element management device 130 may trigger migration of load of the TN cell to an NTN cell based on the fourth request information.

In this manner, the TN element management device 130 can migrate, based on the cell information provided by the network management device 110 and when a migration solution is generated, at least a part of the TN load to the NTN cell and then shut down the TN cell, thereby improving a TN energy-saving amplitude. In addition, the TN element management device 130 is requested in advance to evaluate an area and a time period in which migration is possible, so that when the migration solution is generated, a takeover capability of an NTN can be obtained as required, and real-time performance is better. In addition, the TN element management device 130 may calculate the TN load when the migration solution is generated, exclude some areas from which the load cannot be migrated to the NTN due to a high service quality requirement or high load, and perform takeover estimation on only partial areas from which load is expected to be migrated, so that a range (for example, an area or a time period) that the NTN element management device 120 needs to evaluate can be reduced, and performance is better.

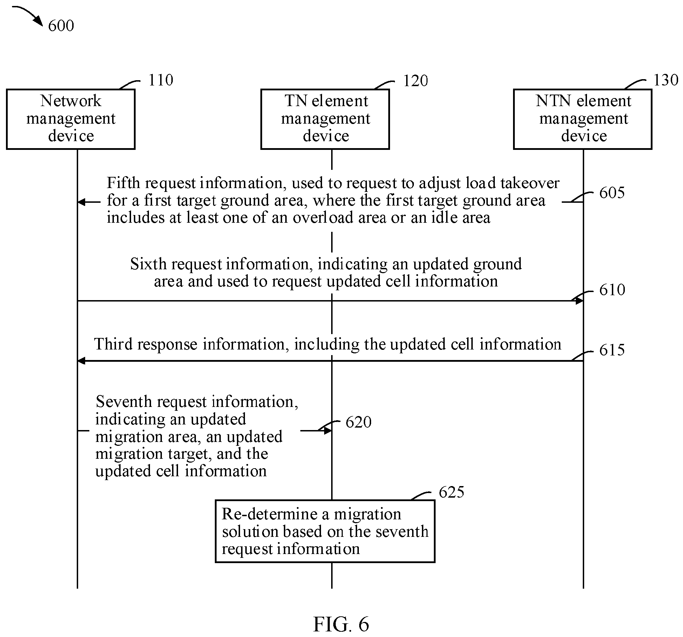

FIG. 6 is an interaction signaling diagram of a fifth communication process according to an embodiment of this disclosure. For clarity of description without any limitation, the process 600 is described with reference to FIG. 1. FIG. 6 relates to the network management device 110, the NTN element management device 120, and the TN element management device 130.

In some embodiments, when load of the NTN element management device 120 is continuously excessively high or excessively low, load migration adjustment may need to be performed, to reduce or increase the service load of the NTN element management device 120. As shown in FIG. 6, in 605, the NTN element management device 120 may send fifth request information to the network management device 110, to request to adjust load takeover for a first target ground area. For example, the first target ground area may include an overload area. The overload area may be an area in which NTN service load is continuously grater than a threshold. For example, the overload area may include one or more polygonal areas (in longitude and latitude) or subnets. In this case, if it is determined, for the overload area, that load of an NTN cell is grater than a first threshold, the NTN element management device 120 may send fifth request information including the overload area to the network management device 110, to request to adjust load takeover for the overload area. In some implementations, if the NTN element management device 120 detects that Physical resource block (Physical Resource Block, PRB) utilization ≥ 70% and Duration ≥ 30 minutes, the TN element management device 130 may send the fifth request information including the overload area to the network management device 110. For another example, the first target ground area may include an idle area. The idle area may be an area in which the NTN service load is continuously less than a threshold. For example, the idle area may include one or more polygonal areas (in longitude and latitude) or subnets. In this case, if it is determined, for the idle area, that the load of the NTN cell is less than a second threshold, the NTN element management device 120 may send fifth request information including the idle area to the network management device 110, to request to adjust the load takeover for the idle area. In some implementations, if the NTN element management device 120 detects that "PRB utilization ≤ 5%" and "Duration ≥ 120 minutes", the NTN element management device 120 may send the fifth request information including the idle area to the network management device 110.

In 610, the network management device 110 sends sixth request information to the NTN element management device 120. The sixth request information may indicate an updated ground area and is used to request updated cell information. The updated cell information is information about an NTN cell that covers the updated ground area and that can take over load of a TN cell covering the updated ground area. The updated ground area is smaller than or equal to the first target ground area. The NTN element management device 120 may perform load estimation and calculation based on the received sixth request information. The load estimation and calculation have been specifically described with reference to FIG. 2, and details are not described herein again. The updated cell information may include an identifier of an updated NTN cell. The updated cell information further includes at least one of an updated time period in which takeover can be performed and an updated quantity of users who can be taken over. Then, in 615, the NTN element management device 120 sends third response information to the network management device 110. The third response information may include the updated cell information. Then, in 620, the network management device 110 sends, to the TN element management device 130, seventh request information used to re-request the TN element management device 130 to trigger load migration. The seventh request information indicates an updated migration area, an updated migration target, and the updated cell information. In 625, the TN element management device 130 re-determines a migration solution based on the seventh request information. For a manner of determining the migration solution, refer to detailed descriptions in FIG. 3. Details are not described herein again.

In this manner, a TN migration solution can be adjusted when the NTN service load is overloaded, so as to reduce an amount of load migrated from an TN to the NTN, thereby ensuring an NTN service access capability. In addition, the TN migration solution can be adjusted when the NTN service load is idle, so as to increase an amount of load migrated from the TN to the NTN, thereby fully utilizing the NTN service access capability.

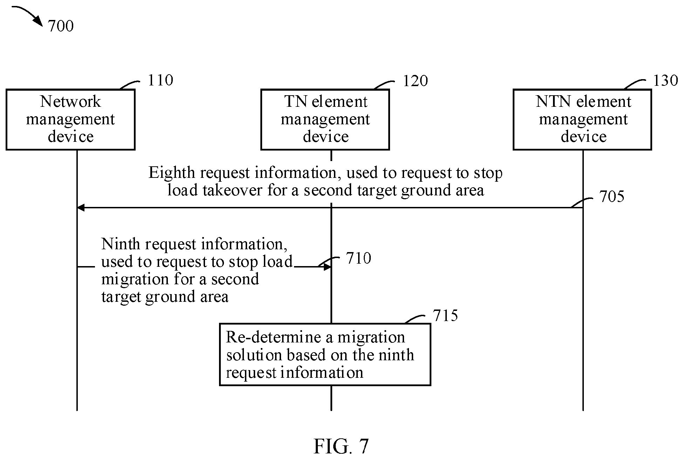

FIG. 7 is an interaction signaling diagram of a sixth communication process according to an embodiment of this disclosure. For clarity of description without any limitation, the process 700 is described with reference to FIG. 1. FIG. 7 relates to the network management device 110, the NTN element management device 120, and the TN element management device 130.

In some embodiments, an NTN may stop taking over load for a TN cell due to some special cases, for example, NTN device maintenance, or a need for ensuring an NTN user access capability in a specific area after a natural disaster. As shown in FIG. 7, in 705, the NTN element management device 120 may send eighth request information to the network management device 110, to request to stop load takeover for a second target ground area. For example, a parameter indicating whether to stop takeover may be set, where true (True) may represent stopping takeover, and false (False) represents not stopping takeover. In 710, the network management device 110 sends ninth request information to the TN element management device 130, to request to stop load migration for the second target ground area. Then, in 715, the TN element management device 130 re-determines a migration solution based on the ninth request information.

In this manner, it can be ensured that the load migration can automatically adapt to service load fluctuation of the NTN, and a service access capability of the NTN is not affected.

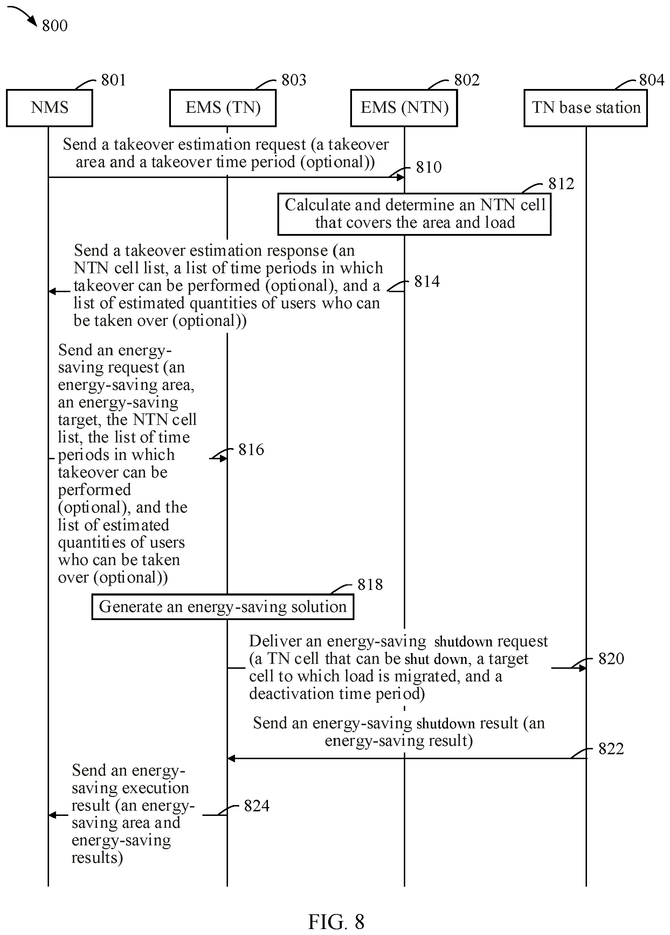

FIG. 8 shows a first example process 800 according to an embodiment of this disclosure. The first example process 800 may be considered as a specific implementation of the third communication process 400 in FIG. 4. For clarity of description without any limitation, the process 800 is described with reference to FIG. 1. In this embodiment, the network management device 110 is implemented as an NMS 801, the NTN element management device 120 is implemented as an NTN EMS 802, and the TN element management device 130 is implemented as a TN EMS 803. The process 800 also relates to a TN base station 804.

As shown in FIG. 8, in 802, the NMS 801 creates a takeover estimation request and sends the takeover estimation request to the NTN EMS 802, where the takeover estimation request includes a ground area and a takeover time period (optional). The ground area may correspond to an energy-saving area. In 812, the NTN EMS 802 performs estimation and calculation. The NTN EMS 802 may calculate a satellite moving route based on a satellite ephemeris, and calculate beam projection of a satellite on the ground by using a satellite antenna model, an atmospheric propagation model, and the like, to determine a satellite base station cell that covers the area in the specified takeover time period and the specified ground area. If the takeover time period is not inputted, an NTN cell list that covers the ground area in any time period during a whole day is determined for calculation. The NTN EMS 802 may analyze historical KPI data of a wireless service in the ground area, predict a quantity (e) of users in each future time period, and subtract the predicted quantity (e) of users from a total quantity (max) of accessible users of an NTN cell covering the area, to obtain an estimated quantity (s) of users who can be taken over by each NTN cell in each future time period, where s>0 indicates that a corresponding satellite is idle in such a time period and can take over ground users. In 814, the NTN EMS 802 returns a takeover estimation result to the NMS 801, where the takeover estimation result includes the NTN cell list, a list of time periods in which takeover can be performed (optional), and a list of estimated quantities of users who can be taken over (optional).

In 816, the NMS 801 creates an energy-saving request and sends the energy-saving request to the TN EMS 803, where the energy-saving request includes an energy-saving area, an energy-saving target, the NTN cell list, the list of time periods in which takeover can be performed (optional), and the list of estimated quantities of users who can be taken over (optional). In 818, the TN EMS 803 performs energy-saving optimization. The TN EMS 803 may analyze a neighboring cell relationship of a TN cell, and obtain a TN cell configured with any one NTN cell in the NTN cell list as a neighboring cell, where load of the TN cell may be taken over by the NTN cell. For the obtained TN cell, historical user load of the cell is analyzed, and a quantity of users in a future time period in which takeover can be performed is predicted. If the time period in which takeover can be performed is not specified, quantities of users in time periods during a whole day are predicted. The TN EMS 803 may select different TN cell combinations, to generate a plurality of solutions in which TN cells can be completely shut down and a constraint "Total quantity of users who are taken over by the TN cells ≤ Estimated quantity of users who can be taken over by the NTN cell" is satisfied, and select a solution with a largest energy-saving benefit for the TN base station 804 from the plurality of solutions, that is, a solution with largest total power consumption, which is calculated by using "Power consumption of cells per unit duration (electric quantity consumption per hour)* shutdownduration". For example, if the estimated quantity of users who can be taken over is not provided, calculation may be performed based on a pre-agreed fixed estimated quantity of users taken over by each satellite. For example, it is agreed that each NTN cell can take over 1,000 users.

In 820, the TN EMS 803 delivers an energy-saving shutdown request to the corresponding TN base station 804, where the energy-saving shutdown request includes a cell that can be shut down, a target NTN cell to which load is migrated, and a shutdowntime period. Then, the TN base station 804 executes an energy-saving solution, for example, may migrate users based on a user switching signaling protocol defined in the 3GPP. The users are migrated to the target NTN cell in the specified time period, and then the TN cell is shut down. An energy-saving shutdown result is collected and sent to the TN EMS 803 in 822. The TN EMS 803 collects energy-saving results of base stations, generates an energy-saving execution result of an area, and sends the energy-saving execution result to the NMS 801 in 824.

In short, in the foregoing process, before activating TN energy-saving, the NMS 801 can send a request to the NTN EMS 802 to obtain energy-saving assistance information, and then attach the energy-saving assistance information to the energy-saving request and send the energy-saving request to the TN EMS 803, so that when the energy-saving solution is generated, the TN EMS 803 shuts down more TN cells after migrating a part of ground user load to an NTN, thereby improving a TN energy-saving amplitude.

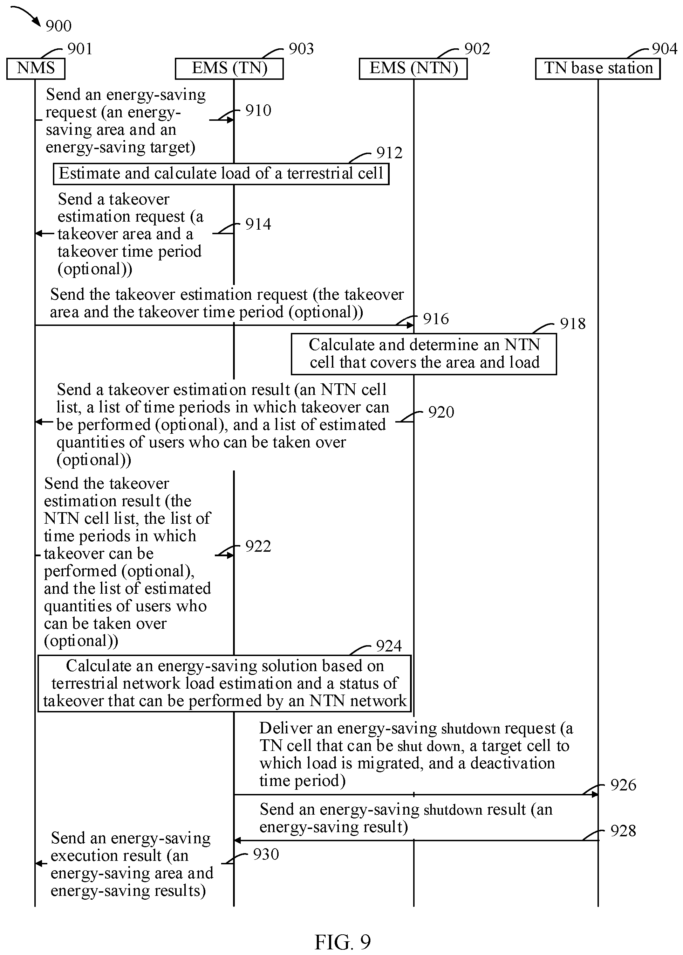

FIG. 9 shows a second example process 900 according to an embodiment of this disclosure. The second example process 900 may be considered as a specific implementation of the fourth communication process 500 in FIG. 5. For clarity of description without any limitation, the process 900 is described with reference to FIG. 1. In this embodiment, the network management device 110 is implemented as an NMS 901, the NTN element management device 120 is implemented as an NTN EMS 902, and the TN element management device 130 is implemented as a TN EMS 903. The process 900 also relates to a TN base station 904.

As shown in FIG. 9, in 910, the NMS 901 creates an energy-saving request and sends the energy-saving request to the TN EMS 903, where the energy-saving request includes an energy-saving area and an energy-saving target. In 912, the TN EMS 903 performs energy-saving optimization, analyzes historical user load of a TN cell, and estimates subsequent load. In 914, the TN EMS 903 requests takeover estimation from the NMS 901, where the takeover estimation includes a ground area and a takeover time period (optional), to evaluate an area that is in the energy-saving area and in which takeover may be performed by an NTN. In 916, the NMS 901 sends a takeover estimation request to the NTN EMS 902. In 918, the NTN EMS 902 performs estimation and calculation, determines an NTN cell list that covers the ground area in the specified takeover time period, estimates load, and obtains a list of time periods in which takeover can be performed (optional), and a list of estimated quantities of users who can be taken over (optional). If the takeover time period is not inputted, an NTN cell list that covers the ground area in any time period during a whole day is determined for calculation.

In 920, the NTN EMS 902 returns the NTN cell list, the list of time periods in which takeover can be performed (optional), and the list of estimated quantities of users who can be taken over (optional) to the NMS 901. In 922, the NMS 901 feeds back an estimation result to the TN EMS 903. In 924, the TN EMS 903 performs energy-saving optimization, and for an outdoor TN cell configured with an NTN cell as a neighboring cell, analyzes historical user load, and predicts a quantity of users in a time period in which takeover can be performed. In addition, the TN EMS 903 selects different TN cell combinations, to generate a plurality of solutions in which complete shutdown can be performed and a constraint "Total quantity of users who are taken over ≤ Estimated quantity of users who can be taken over" is satisfied, and selects a solution with a largest energy-saving benefit from the plurality of solutions.

In 926, the TN EMS 903 delivers an energy-saving shutdown request to the corresponding TN base station 904, where the energy-saving shutdown request includes a cell that can be shutdown, a target cell to which load is migrated, and a shutdown time period. In 928, the TN base station 904 sends an energy-saving shutdown result to the TN EMS 903. The TN EMS 903 collects energy-saving results of base stations, generates an energy-saving execution result of an area, and sends the energy-saving execution result to the NMS 901 in 930.

In short, in the foregoing process, when an energy-saving solution is generated, the TN EMS 903 can obtain a takeover capability of the NTN from the NMS 901, and generate, based on the takeover capability, an energy-saving solution in which users of at least a part of low-load TN cells are migrated to the NTN cell and then a corresponding TN cell is shut down. When the energy-saving solution is generated, the TN EMS 903 may calculate load of a TN, exclude some areas from which load cannot be migrated to the NTN due to a high service quality requirement or high load, and perform takeover estimation on only partial areas from which load is expected to be migrated, so that a calculation range of the NTN EMS 902 can be reduced, and performance is better.

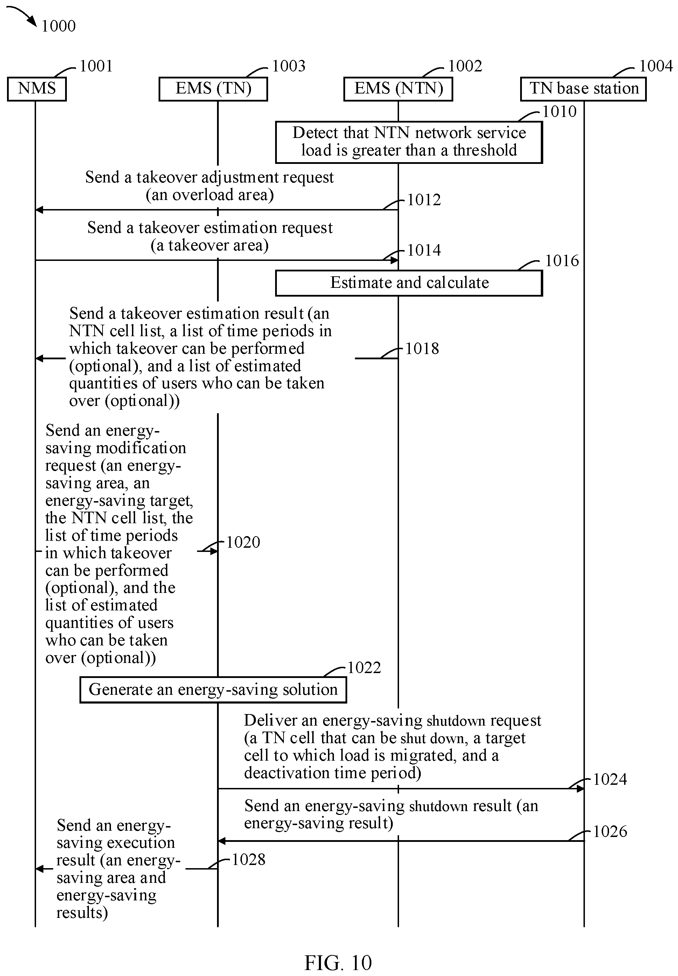

FIG. 10 shows a third example process 1000 according to an embodiment of this disclosure. The third example process 1000 may be considered as a specific implementation of the fifth communication process 600 in FIG. 6. For clarity of description without any limitation, the process 1000 is described with reference to FIG. 1. In this embodiment, the network management device 110 is implemented as an NMS 1001, the NTN element management device 120 is implemented as an NTN EMS 1002, and the TN element management device 130 is implemented as a TN EMS 1003. The process 1000 also relates to a TN base station 1004.

As shown in FIG. 10, in 1010, the NTN EMS 1002 detects that NTN service load is grater than a threshold. NTN wireless network load is generally measured using PRB utilization as an indicator. A network administrator may set an overload threshold on the EMS in advance, for example, "PRB utilization ≥ 70%" and "Duration ≥ 30 minutes". In 1012, the NTN EMS 1002 sends a takeover adjustment request to the NMS, where the takeover adjustment request includes an overload area. In 1014, the NMS 1001 re-delivers a takeover estimation request to the NTN EMS 1002, and uses the overload area as a ground area that is inputted. In 1016, the NTN EMS 1002 performs estimation and calculation again based on new KPI data of an NTN. In 1018, the NTN EMS 1002 returns an NTN cell list, a list of time periods in which takeover can be performed (optional), and a list of estimated quantities of users who can be taken over (optional) to the NMS 1001. In 1020, the NMS 1001 delivers an energy-saving modification request to the TN EMS 1003 based on a refreshed estimation result. In 1022, the TN EMS 1003 regenerates an energy-saving solution. In 1024, the TN EMS 1003 delivers an energy-saving shutdown request to the corresponding TN base station, where the energy-saving shutdown request includes a cell that can be shut down, a target cell to which load is migrated, and a shutdown time period. In 1026, the TN base station sends an energy-saving shutdown result to the TN EMS 1003. The TN EMS 1003 collects energy-saving shutdown results of base stations, generates an energy-saving execution result of an area, and sends the energy-saving execution result to the NMS 1001 in 1028.

In this manner, when the NTN load is grater than the threshold, a takeover capability can be re-adjusted, and the NTN service load can be reduced.

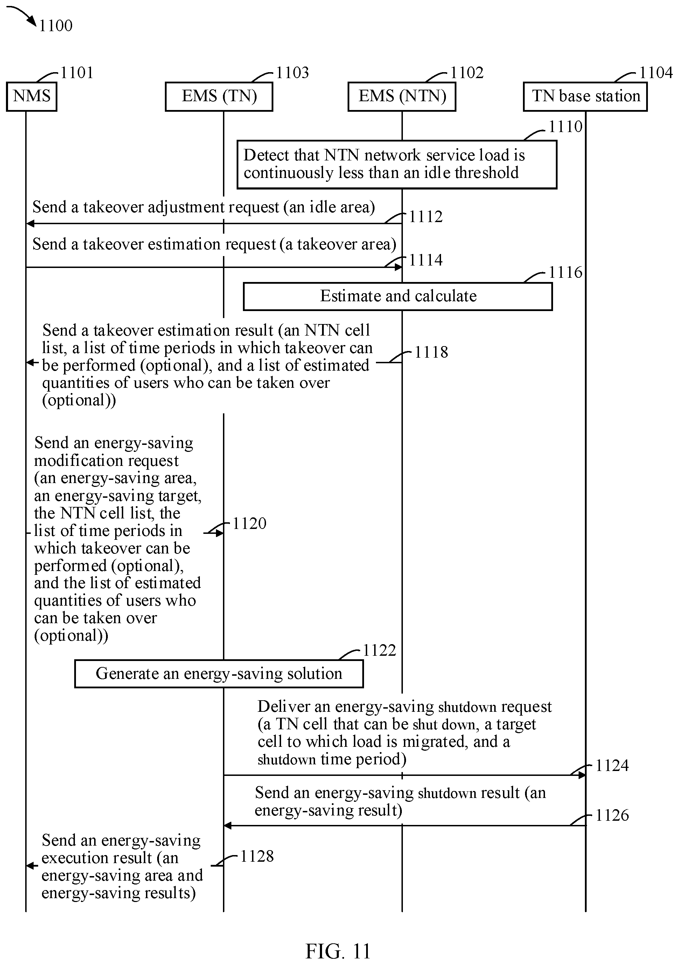

FIG. 11 shows a fourth example process 1100 according to an embodiment of this disclosure. The fourth example process 1100 may be considered as a specific implementation of the fifth communication process 600 in FIG. 6. For clarity of description without any limitation, the process 1100 is described with reference to FIG. 1. In this embodiment, the network management device 110 is implemented as an NMS 1101, the NTN element management device 120 is implemented as an NTN EMS 1102, and the TN element management device 130 is implemented as a TN EMS 1103. The process 1100 also relates to a TN base station 1104.

As shown in FIG. 11, in 1110, the NTN EMS 1102 detects that NTN service load is continuously less than a threshold, that is, an additional takeover capability exists. A network administrator may set an idle threshold on the EMS in advance, for example, "PRB utilization ≤ 5%" and "Duration ≥ 120 minutes". In 1112, the NTN EMS 1112 sends a takeover adjustment request to the NMS 1101, where the takeover adjustment request includes an idle area. In 1114, the NMS 1101 re-delivers a takeover estimation request to the NTN EMS 1102, and uses the idle area as a ground area that is inputted. In 1116, the NTN EMS 1102 performs estimation and calculation again based on new KPI data of an NTN. In 1118, the NTN EMS 1102 returns an NTN cell list, a list of time periods in which takeover can be performed (optional), and a list of estimated quantities of users who can be taken over (optional) to the NMS 1101. In 1120, the NMS 1101 delivers an energy-saving modification request to the TN EMS 1103 based on a refreshed estimation result. In 1122, the TN EMS 1103 regenerates an energy-saving solution. In 1124, the TN EMS 1103 delivers an energy-saving shutdown request to the corresponding TN base station, where the energy-saving shutdown request includes a cell that can be shut down, a target cell to which load is migrated, and a shutdown time period. In 1126, the TN base station sends an energy-saving shutdown result to the TN EMS 1103. The TN EMS 1103 collects energy-saving shutdown results of base stations, generates an energy-saving execution result of an area, and sends the energy-saving execution result to the NMS 1101 in 1128.

In this manner, when the NTN load is continuously less than the idle threshold, a takeover capability can be re-adjusted, thereby improving a TN energy-saving amplitude.

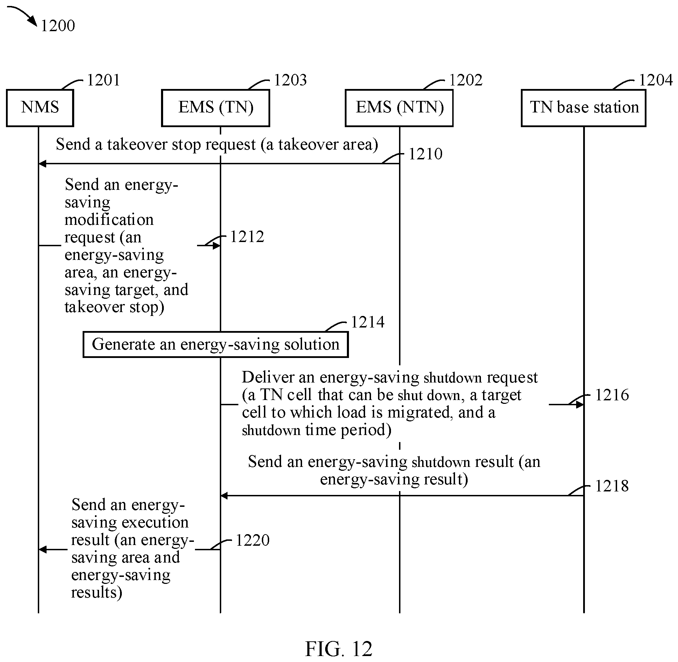

FIG. 12 shows a fourth example process 1200 according to an embodiment of this disclosure. The fourth example process 1200 may be considered as a specific implementation of the sixth communication process 700 in FIG. 7. For clarity of description without any limitation, the process 1200 is described with reference to FIG. 1. In this embodiment, the network management device 110 is implemented as an NMS 1201, the NTN element management device 120 is implemented as an NTN EMS 1202, and the TN element management device 130 is implemented as a TN EMS 1203. The process 1200 also relates to a TN base station 1204.

As shown in FIG. 12, in 1210, the NTN EMS 1202 sends a takeover stop request to the NMS 1201, where the takeover stop request includes a ground area. In 1212, the NMS 1201 searches for, based on the ground area, an energy-saving task that includes the area, and sends an energy-saving modification request to the NTN EMS 1202, where the energy-saving modification request includes a takeover stop indication. In 1214, the TN EMS 1203 regenerates an energy-saving solution, and does not cause load to be taken over by an NTN cell, that is, keeps a part of TN cells activated for basic coverage access, and the load is allowed to be migrated only to the TN cells that are kept activated, and is not migrated to the NTN cell. In 1216, the TN EMS 1203 delivers an energy-saving shutdown request to the corresponding TN base station, where the energy-saving shutdown request includes a cell that can be shut down, a target cell to which load is migrated, and a shutdown time period. In 1218, the TN base station sends an energy-saving shutdown result to the TN EMS 1203. The TN EMS 1203 collects energy-saving shutdown results of base stations, generates an energy-saving execution result of an area, and sends the energy-saving execution result to the NMS 1201 in 1220.

In this manner, a method for stopping TN energy-saving takeover is provided in a special case of a network, for example, NTN device maintenance or a need for ensuring an NTN user access capability in a specific area after a natural disaster. This method is more time-efficient and can release, in time, all load migrated to the NTN cell.

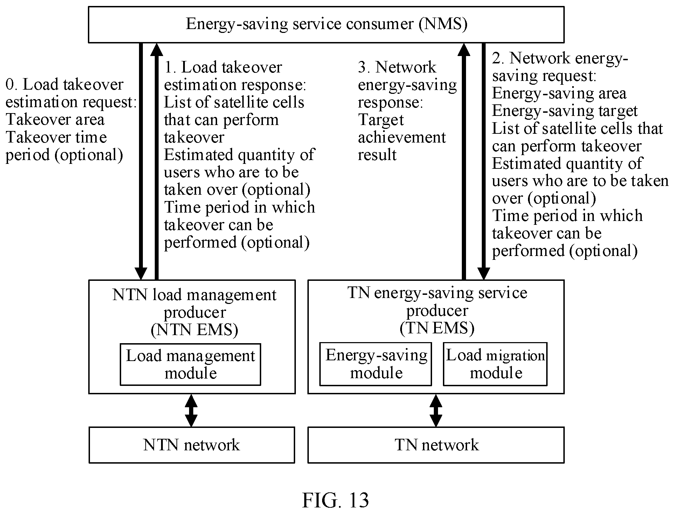

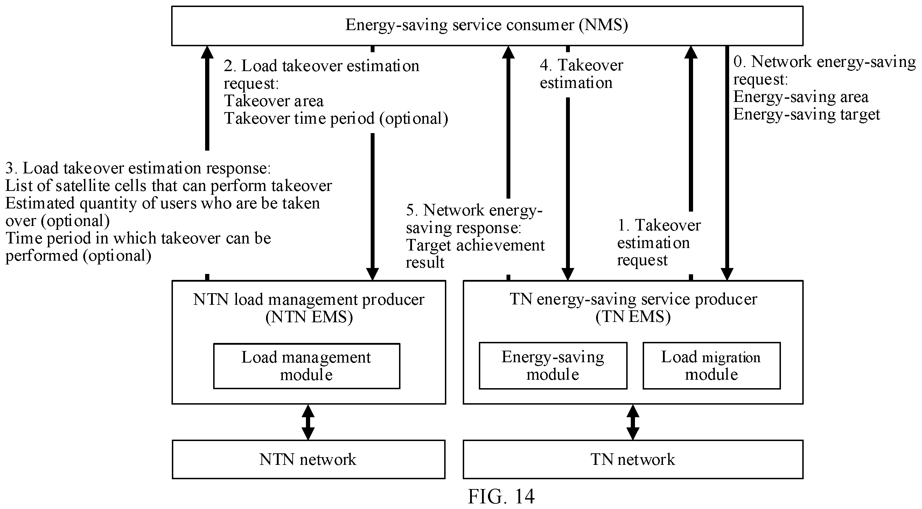

FIG. 13 and FIG. 14 show example system architectures and module implementations according to embodiments of this disclosure. In the architectures in FIG. 13 and FIG. 14, an energy-saving service consumer may be used to invoke an energy-saving service. For example, the energy-saving service consumer may be in an NMS. A TN energy-saving service producer may be used to provide a TN energy-saving service. For example, the TN energy-saving service producer may be in a TN EMS. An NTN load management producer may be used to provide NTN load estimation and monitoring services. For example, the NTN load management producer may be in an NTN EMS.

In the architecture shown in FIG. 13, before energy-saving is activated, the energy-saving service consumer obtains an NTN takeover capability in advance, and then performs TN energy saving. As shown in FIG. 13, in operation 0, the energy-saving service consumer delivers a load takeover estimation request to the NTN load management producer, and specifies an area on which energy saving is to be performed as an inputted ground area. In operation 1, the NTN load management producer analyzes service load of satellite base stations covering the specified area, predicts peak and off-peak hours of each satellite base station, and an estimated quantity of users who can be migrated in each time period, that is, a quantity of users who can be taken over, and returns, to the energy-saving service consumer, a response including related energy-saving assistance information about TN load that can be taken over. In operation 2, the energy-saving service consumer delivers an energy-saving request carrying additional energy-saving assistance information to the TN energy-saving service producer. For example, in addition to an energy-saving area and an energy-saving target, related information that can be migrated to an NTN may also be carried. In operation 3, the TN energy-saving service producer generates a load migration solution based on load of a TN and the energy-saving assistance information. Based on the information that can be migrated to the NTN, the TN energy-saving service producer may calculate and select a user transfer solution with a largest energy-saving benefit. For example, a part of the TN load may be migrated to a few base stations of the TN, the other part of the load may be migrated to the NTN, and a TN cell with no load may be shut down. After an energy-saving solution is executed, an energy-saving response is returned to the energy-saving service consumer.

A load management module in the NTN load management producer may be responsible for monitoring NTN load, and analyzing and obtaining a service load trend of the NTN. An energy-saving module in the TN energy-saving service producer may generate, based on the energy-saving target, an energy-saving solution of migrating load and shutting down a cell, and shut down the TN cell with no load based on a load migration result of a load migration module. The load migration module in the TN energy-saving service producer may migrate, based on the load migration solution, the part of the TN load to a few base stations of the TN, and the other part of the load to the NTN.

In the architecture shown in FIG. 14, after energy-saving is activated, the TN energy-saving service producer obtains an NTN takeover capability, and performs TN energy-saving. As shown in FIG. 14, in operation 0, the energy-saving service consumer delivers an energy-saving request that specifies an area on which energy saving is to be performed to the TN energy-saving service producer. In operation 1, the TN energy-saving service producer sends a takeover estimation request to the energy-saving service consumer. In operation 2, the energy-saving service consumer delivers a load takeover estimation request to the NTN load management producer. In operation 3, after calculation, a load management module of the NTN load management producer returns related energy-saving assistance information about TN load that can be taken over. In operation 4, the energy-saving service consumer returns a load takeover estimation response carrying the energy-saving assistance information to the TN energy-saving service producer. In operation 5, the TN energy-saving service producer generates a load migration solution based on load of a TN and the energy-saving assistance information; migrates a part of the TN load to a few base stations of the TN, and the other part of the load to an NTN; shuts down a TN cell with no load; and returns an energy-saving response to the energy-saving service consumer.

The load management module in the NTN load management producer may be responsible for monitoring NTN load, and analyzing and obtaining a service load trend of the NTN. An energy-saving module in the TN energy-saving service producer may generate, based on an energy-saving target, an energy-saving solution of migrating load and shutting down a cell, and shut down the TN cell with no load based on a load migration result of a load migration module. The load migration module in the TN energy-saving service producer may migrate, based on the load migration solution, the part of the TN load to a few base stations of the TN, and the other part of the load to the NTN.

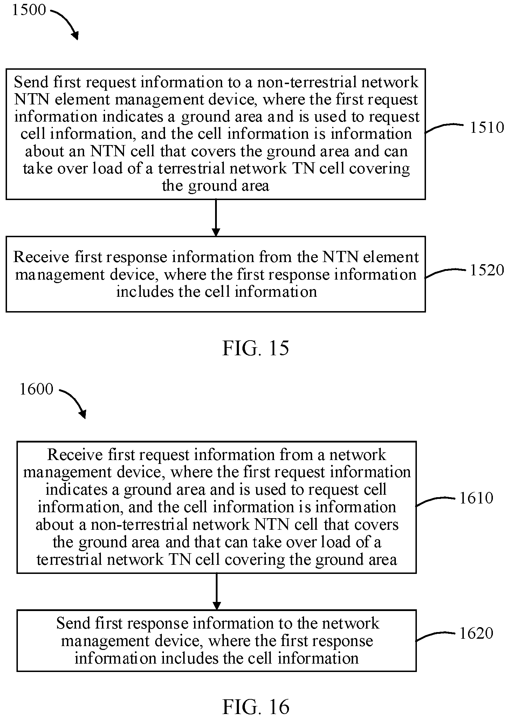

FIG. 15 is a schematic flowchart of a method 1500 implemented on a terminal device according to an embodiment of this disclosure. In a possible implementation, the method 1500 may be implemented by a network management device 110 in a communication system 100. In another possible implementation, the method 1500 may alternatively be implemented by another communication device independent of the communication system 100. In an example, the following describes the method 1500 by using an example in which the method 1500 is implemented by the network management device 110 in the communication system 100.

In block 1510, the network management device 110 sends first request information to a non-terrestrial network NTN element management device 120, where the first request information indicates a ground area and is used to request cell information, and the cell information is information about an NTN cell that covers the ground area and that can take over load of a terrestrial network TN cell covering the ground area. In block 1520, the network management device 110 receives first response information from the NTN element management device 120, where the first response information includes the cell information.

It may be understood that the method 1500 may further include any other operation or action performed by the network management device 110 in some embodiments of this application described with reference to FIG. 1 to FIG. 14 in this specification. Details are not described herein again.

FIG. 16 is a schematic flowchart of a method 1600 implemented on a network device according to an embodiment of this disclosure. In a possible implementation, the method 1600 may be implemented by an NTN element management device 120 in a communication system 100. In another possible implementation, the method 1600 may alternatively be implemented by another communication device independent of the communication system 100. In an example, the following describes the method 1600 by using an example in which the method 1600 is implemented by the NTN element management device 120 in the communication system 100.

In block 1610, the NTN element management device 120 receives first request information from a network management device 110, where the first request information indicates a ground area and is used to request cell information, and the cell information is information about a non-terrestrial network NTN cell that covers the ground area and that can take over load of a terrestrial network TN cell covering the ground area. In block 1620, the NTN element management device 120 sends first response information to the network management device 110, where the first response information includes the cell information.

It may be understood that the method 1600 may further include any other operation or action performed by the NTN element management device 120 in some embodiments of this application described with reference to FIG. 1 to FIG. 14 in this specification. Details are not described herein again.

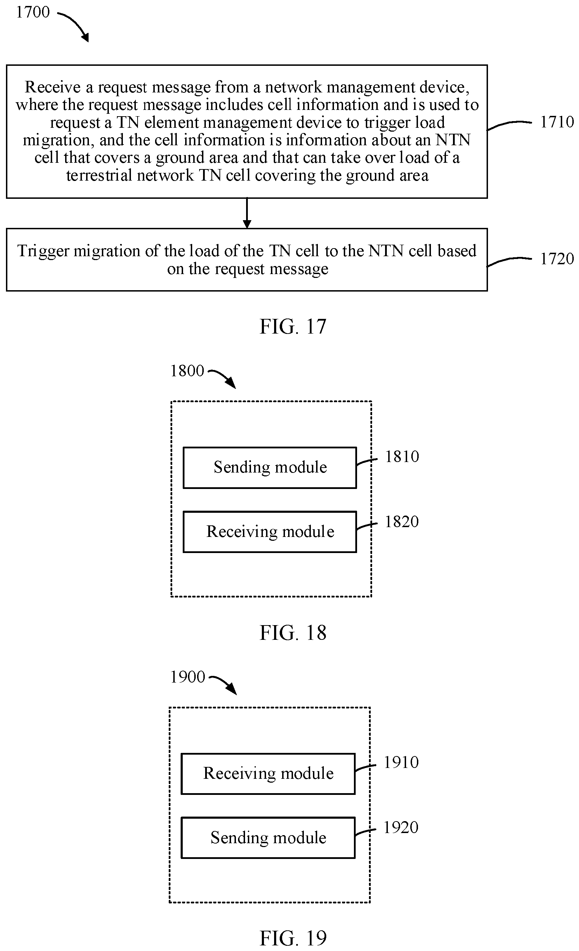

FIG. 17 is a schematic flowchart of a method 1700 implemented on a network device according to an embodiment of this disclosure. In a possible implementation, the method 1700 may be implemented by a TN element management device 130 in a communication system 100. In another possible implementation, the method 1700 may alternatively be implemented by another communication device independent of the communication system 100. In an example, the following describes the method 1700 by using an example in which the method 1700 is implemented by the TN element management device 130 in the communication system 100.

In block 1710, the TN element management device 130 receives a request message from a network management device 110, where the request message includes cell information and is used to request the TN element management device 130 to trigger load migration, and the cell information is information about an NTN cell that covers a ground area and that can take over load of a terrestrial network TN cell covering the ground area. In block 1720, the TN element management device 130 triggers migration of the load of the TN cell to the NTN cell based on the request message.

It may be understood that the method 1700 may further include any other operation or action performed by the TN element management device 130 in some embodiments of this application described with reference to FIG. 1 to FIG. 14 in this specification. Details are not described herein again.

FIG. 18 is a block diagram of a first communication apparatus 1800 according to some embodiments of this application. The first communication apparatus 1800 may be implemented as the network management device 110 shown in FIG. 1, or may be implemented as a part (for example, a chip) of the network management device 110. This is not limited in this disclosure. The first communication apparatus 1800 may include a plurality of modules configured to perform corresponding processing in the method 1500 discussed in FIG. 15.

As shown in FIG. 18, the first communication apparatus 1800 includes a sending module 1810 and a receiving module 1820. The sending module 1810 is configured to send first request information to a non-terrestrial network NTN element management device, where the first request information indicates a ground area and is used to request cell information, and the cell information is information about an NTN cell that covers the ground area and that can take over load of a terrestrial network TN cell covering the ground area. The receiving module 1820 is configured to receive first response information from the NTN element management device, where the first response information includes the cell information. In this manner, service load in a low-load area of a TN can be migrated to an NTN, so that more TN cells can be shut down, thereby improving a TN energy-saving amplitude.

It may be understood that the first communication apparatus 1800 may further include various other modules, configured to perform any other operation or action performed by the network management device 110 in some embodiments of this application described with reference to FIG. 1 to FIG. 14 in this specification. Details are not described herein again.

FIG. 19 is a block diagram of a second communication apparatus 1900 according to some embodiments of this application. The second communication apparatus 1900 may be implemented as the NTN element management device 120 shown in FIG. 1, or may be implemented as a part (for example, a chip) of the NTN element management device 120. This is not limited in this disclosure. The second communication apparatus 1900 may include a plurality of modules configured to perform corresponding processing in the method 1600 discussed in FIG. 16.

As shown in FIG. 19, the second communication apparatus 1900 includes a receiving module 1910 and a sending module 1920. The receiving module 1910 is configured to receive first request information from a network management device, where the first request information indicates a ground area and is used to request cell information, and the cell information is information about a non-terrestrial network NTN cell that covers the ground area and that can take over load of a terrestrial network TN cell covering the ground area. The sending module 1920 is configured to send first response information to the network management device, where the first response information includes the cell information. In this manner, service load in a low-load area of a TN can be migrated to an NTN, so that more TN cells can be shut down, thereby improving a TN energy-saving amplitude.

It may be understood that the second communication apparatus 1900 may further include various other modules, configured to perform any other operation or action performed by the NTN element management device 120 in some embodiments of this application described with reference to FIG. 1 to FIG. 14 in this specification. Details are not described herein again.

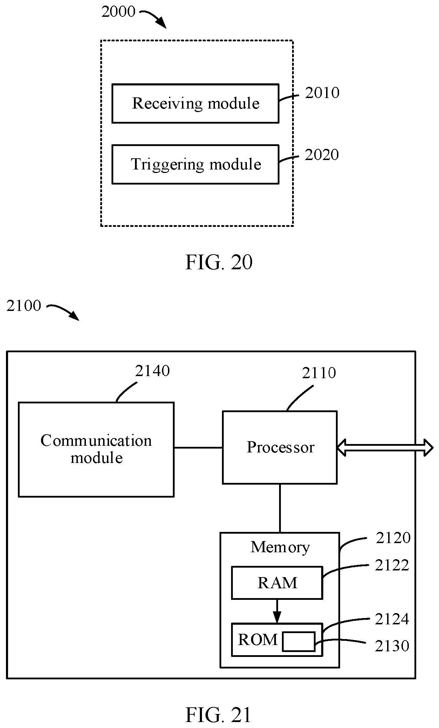

FIG. 20 is a block diagram of a third communication apparatus 2000 according to some embodiments of this application. The third communication apparatus 2000 may be implemented as the TN element management device 130 shown in FIG. 1, or may be implemented as a part (for example, a chip) of the TN element management device 130. This is not limited in this disclosure. The third communication apparatus 2000 may include a plurality of modules configured to perform corresponding processing in the method 1700 discussed in FIG. 17.

As shown in FIG. 20, the third communication apparatus 2000 includes a receiving module 2010 and a triggering module 2020. The receiving module 2010 is configured to receive a request message from a network management device, where the request message includes cell information and is used to request a TN element management device to trigger load migration, and the cell information is information about an NTN cell that covers a ground area and that can take over load of a terrestrial network TN cell covering the ground area. The triggering module 2020 is configured to trigger migration of the load of the TN cell to the NTN cell based on the request message. In this manner, service load in a low-load area of a TN can be migrated to an NTN, so that more TN cells can be shut down, thereby improving a TN energy-saving amplitude.

It may be understood that the third communication apparatus 2000 may further include various other modules, configured to perform any other operation or action performed by the TN element management device 130 in some embodiments of this application described with reference to FIG. 1 to FIG. 14 in this specification. Details are not described herein again.

FIG. 21 is a block diagram of an example communication device 2100 that may be used to implement an embodiment of this disclosure. The device 2100 may be implemented as or include the network management device 110, the NTN element management device 120, or the TN element management device 130 in FIG. 1. As shown in the figure, the device 2100 includes one or more processors 2110, one or more memories 2120 coupled to the processor 2110, and a communication module 2140 coupled to the processor 2110.

The communication module 2140 may be configured for bidirectional communication. The communication module 2140 may have at least one communication interface for communication. The communication interface may include any interface necessary for communicating with another device.

The processor 2110 may be of any type appropriate for a local technology network, and may include but is not limited to at least one of the following: one or more of a general-purpose computer, a dedicated computer, a microcontroller, a digital signal processor (Digital Signal Processor, DSP), or a controller-based multi-core controller architecture. The device 2100 may have a plurality of processors, such as an application-specific integrated circuit chip, which in terms of time, belongs to a clock synchronized with a main processor.

The memory 2120 may include one or more non-volatile memories and one or more volatile memories. An example of the non-volatile memory includes but is not limited to at least one of the following: a read-only memory (Read-Only Memory, ROM) 2124, an erasable programmable read-only memory (Erasable Programmable Read-Only Memory, EPROM), a flash memory, a hard disk, a compact disc (Compact Disc, CD), a digital versatile disc (Digital Versatile Disc, DVD), or other magnetic storage and/or optical storage. An example of the volatile memory includes but is not limited to at least one of the following: a random access memory (Random Access Memory, RAM) 2122, or another volatile memory that does not last in power-off duration.

A computer program 2130 includes computer-executable instructions executed by an associated processor 2110. The program 2130 may be stored in the ROM 2124. The processor 2110 may perform any appropriate action and processing by loading the program 2130 into the RAM 2122.

Embodiments of this disclosure may be implemented using the program 2130, so that the device 2100 can perform any process discussed with reference to FIG. 15 to FIG. 17. Embodiments of this disclosure may alternatively be implemented using hardware or a combination of software and hardware.

The program 2130 may be tangibly included in a computer-readable medium, and the computer-readable medium may be included in the device 2100 (for example, in the memory 2120) or another storage device that can be accessed by the device 2100. The program 2130 may be loaded from the computer-readable medium to the RAM 2122 for execution. The computer-readable medium may include any type of tangible non-volatile memory, for example, a ROM, an EPROM, a flash memory, a hard disk, a CD, or a DVD.

In some embodiments, the communication module 2140 in the device 2100 may be implemented as a transmitter and a receiver (or a transceiver). In addition, the device 2100 may further include one or more of a scheduler, a controller, and a radio frequency/antenna. Details are not described in this disclosure.

For example, the device 2100 in FIG. 21 may be implemented as an electronic device, or may be implemented as a chip or a chip system in the electronic device. This is not limited in embodiments of this disclosure.

When the foregoing communication device 2100 is a chip used in a terminal, the chip in the terminal implements functions of the terminal in the foregoing method embodiments. The chip in the terminal receives, through another module (for example, a radio frequency module or an antenna) in the terminal, information sent by a base station to the terminal. Alternatively, the chip in the terminal sends information to another module (for example, a radio frequency module or an antenna) in the terminal, where the information is sent by the terminal to the base station.

When the foregoing communication device 2100 is a module used in a base station, the module in the base station implements functions of the base station in the foregoing method embodiments. The module in the base station receives information from another module (for example, a radio frequency module or an antenna) in the base station, where the information is sent by a terminal to the base station. Alternatively, the module in the base station sends information to another module (for example, a radio frequency module or an antenna) in the base station, where the information is sent by the base station to the terminal. The module in the base station herein may be a baseband chip of the base station, may be a CU, a DU, or another module, or may be an apparatus in an open radio access network (open radio access network, O-RAN) architecture, for example, an apparatus such as an open CU or an open DU.

An embodiment of this disclosure further provides a chip. The chip may include an input interface, an output interface, and a processing circuit. In embodiments of this disclosure, the input interface and the output interface may complete signaling or data interaction, and the processing circuit may complete generation and processing of signaling or data information.

An embodiment of this disclosure further provides a chip system, including a processor, configured to support a compute device in implementing functions in any one of the foregoing embodiments. In a possible design, the chip system may further include a memory, configured to store necessary program instructions and data. When the processor runs the program instructions, a device in which the chip system is installed is enabled to implement the method in any one of the foregoing embodiments. For example, the chip system may include one or more chips, or may include a chip and another discrete device.

An embodiment of this disclosure further provides a processor, configured to be coupled to a memory. The memory stores instructions. When the processor runs the instructions, the processor is enabled to perform the method and the function in any one of the foregoing embodiments.

An embodiment of this disclosure further provides a computer program product including instructions. When the computer program product is run on a computer, the computer is enabled to perform the method and the function in any one of the foregoing embodiments.

An embodiment of this disclosure further provides a computer-readable storage medium. The computer-readable storage medium stores computer instructions. When a processor runs the instructions, the processor is enabled to perform the method and the function in any one of the foregoing embodiments.

Generally, various embodiments of this disclosure may be implemented using hardware or a dedicated circuit, software, logic, or any combination thereof. Some aspects may be implemented using hardware, and other aspects may be implemented using firmware or software, and may be executed by a controller, a microprocessor, or another compute device. Although various aspects of embodiments of this disclosure are shown and described as block diagrams, flowcharts, or some other figures, it should be understood that the blocks, apparatuses, systems, techniques, or methods described in this specification may be implemented as, for example but not limited to, hardware, software, firmware, dedicated circuits or logic, general-purpose hardware, controllers, other compute devices, or a combination thereof.

An embodiment of this disclosure further provides at least one computer program product tangibly stored in a non-transitory computer-readable storage medium. The computer program product includes computer-executable instructions, such as instructions included in a program module, which are executed in a device on a real or virtual target processor to perform the process/method as described above with reference to the accompanying drawings. Generally, the program module includes a routine, a program, a library, an object, a class, a component, a data structure, or the like that executes a specific task or implements a specific abstract data type. In various embodiments, functions of program modules may be combined or split between the program modules as required. Machine-executable instructions for the program module may be executed locally or in a distributed device. In the distributed device, the program module may be locally located and located in a remote storage medium.

Computer program code for implementing the methods in embodiments of this disclosure may be written in one or more programming languages. The computer program code may be provided for a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed entirely on a computer, partly on a computer, as a standalone software package, partly on a computer and partly on a remote computer, or entirely on a remote computer or a server.

In the context of this disclosure, the computer program code or related data may be carried in any appropriate carrier, so that the device, the apparatus, or the processor can perform various processing and operations described above. Examples of the carrier include a signal, a computer-readable medium, and the like. Examples of the signal may include an electrical signal, an optical signal, a radio signal, a voice signal, or other forms of propagated signals, such as a carrier wave and an infrared signal.

The computer-readable medium may be any tangible medium that includes or stores programs used for or related to an instruction execution system, apparatus, or device. The computer-readable medium may be a computer-readable signal medium or a computer-readable storage medium. The computer-readable medium may include but is not limited to an electronic, magnetic, optical, electromagnetic, infrared, or semiconductor system, apparatus or device, or any appropriate combination thereof. More detailed examples of the computer-readable storage medium include electrical connection with one or more wires, a portable computer disk, a hard disk, a random access memory (RAM), a read-only memory (ROM), an erasable programmable read-only memory (EPROM or a flash memory), an optical storage device, a magnetic storage device, or any appropriate combination thereof.

In addition, although the operations of the methods in embodiments of this disclosure are described in a particular order in the accompanying drawings, this does not require or imply that these operations need to be performed in the particular order, or that all the operations shown need to be performed to achieve the desired results. Instead, execution orders of the steps depicted in the flowcharts may change. Additionally or alternatively, some steps may be omitted, a plurality of steps may be combined into one step for execution, and/or one step may be broken down into a plurality of steps for execution. It should further be noted that, features and functions of two or more apparatuses according to embodiments of this disclosure may be specific in one apparatus. In addition, features and functions of one apparatus described above may be further specific in a plurality of apparatuses.

Various implementations of embodiments of this disclosure have been described above. The foregoing descriptions are examples, are not exhaustive, and are not limited to the disclosed implementations. Without departing from the scope of the described implementations, many modifications and variations are apparent to a person of ordinary skill in the art. Selection of the terms used in this specification is intended to well explain principles of the implementations, actual applications, or improvements to technologies in the market, or to enable another person of ordinary skill in the art to understand the implementations disclosed in this specification.

## Claims

1. A method, comprising:
sending first request information to a non-terrestrial network NTN element management device, wherein the first request information indicates a ground area and is used to request cell information, and the cell information is information about an NTN cell that covers the ground area and that can take over load of a terrestrial network TN cell covering the ground area; and
receiving first response information from the NTN element management device, wherein the first response information comprises the cell information.

2. The method according to claim 1, wherein the first request information further indicates a takeover time period.

3. The method according to claim 1 or 2, wherein the cell information comprises an identifier of the NTN cell.

4. The method according to claim 3, wherein the cell information further comprises at least one of the following:
a time period in which takeover can be performed; or
a quantity of users who can be taken over.

5. The method according to any one of claims 1 to 4, further comprising:
after receiving the first response information, sending a request message to a TN element management device, wherein the request message comprises the cell information and is used to request the TN element management device to trigger load migration.

6. The method according to claim 5, wherein the request message comprises second request information, the second request information further indicates a migration area and a migration target, and the ground area is smaller than or equal to the migration area.

7. The method according to claim 6, further comprising:
before sending the first request information, sending third request information to the TN element management device, wherein the third request information indicates a migration area and a migration target, the third request information is used to request the TN element management device to determine migration assistance information associated with load that is expected to be migrated from the TN cell, and the ground area is smaller than or equal to the migration area; and
receiving second response information from the TN element management device, wherein the second response information comprises the migration assistance information, and the migration assistance information comprises the ground area.

8. The method according to claim 7, wherein the migration assistance information further comprises a takeover time period.

9. The method according to claim 5, wherein the request message comprises fourth request information, and sending the request message comprises:
after receiving the first response information, sending the fourth request information to the TN element management device.

10. The method according to any one of claims 1 to 9, further comprising:
receiving fifth request information from the NTN element management device, wherein the fifth request information is used to request to adjust load takeover for a first target ground area, and the first target ground area comprises at least one of an overload area or an idle area.

11. The method according to claim 10, further comprising:
sending sixth request information to the NTN element management device, wherein the sixth request information indicates an updated ground area and is used to request updated cell information, the updated cell information is information about an NTN cell that covers the updated ground area and that can take over load of a TN cell covering the updated ground area, and the updated ground area is smaller than or equal to the first target ground area; and
receiving third response information from the NTN element management device, wherein the third response information comprises the updated cell information.

12. The method according to claim 11, wherein the updated cell information comprises an identifier of an updated NTN cell.

13. The method according to claim 12, wherein the updated cell information further comprises at least one of the following:
an updated time period in which takeover can be performed; or
an updated quantity of users who can be taken over.

14. The method according to any one of claims 11 to 13, further comprising:
sending seventh request information to the TN element management device based on the third response information, wherein the seventh request information indicates an updated migration area, an updated migration target, and the updated cell information, and the seventh request information is used to re-request the TN element management device to trigger load migration.

15. The method according to any one of claims 1 to 14, further comprising:
receiving eighth request information from the NTN element management device, wherein the eighth request information is used to request to stop load takeover for a second target ground area.

16. The method according to claim 15, further comprising:
sending ninth request information to the TN element management device based on the eighth request information, wherein the ninth request information is used to request to stop load migration for the second target ground area.

17. A method, comprising:
receiving first request information from a network management device, wherein the first request information indicates a ground area and is used to request cell information, and the cell information is information about a non-terrestrial network NTN cell that covers the ground area and that can take over load of a terrestrial network TN cell covering the ground area; and
sending first response information to the network management device, wherein the first response information comprises the cell information.

18. The method according to claim 17, wherein the first request information further indicates a takeover time period.

19. The method according to claim 17 or 18, wherein the cell information comprises an identifier of the NTN cell.

20. The method according to claim 19, wherein the cell information further comprises at least one of the following:
a time period in which takeover can be performed; or
a quantity of users who can be taken over.

21. The method according to any one of claims 17 to 20, further comprising:
sending fifth request information to the network management device, wherein the fifth request information is used to request to adjust load takeover for a first target ground area, and the first target ground area comprises at least one of an overload area or an idle area.

22. The method according to claim 21, wherein sending the fifth request information comprises at least one of the following:
when the first target ground area comprises the overload area, determining, based on the overload area, that load of the NTN cell is grater than a first threshold, and sending the fifth request information to the network management device; or
when the first target ground area comprises the idle area, determining, based on the idle area, that the load of the NTN cell is less than a second threshold, and sending the fifth request information to the network management device.

23. The method according to claim 21 or 22, further comprising:
receiving sixth request information from the network management device, wherein the sixth request information indicates an updated ground area and is used to request updated cell information, the updated cell information is information about an NTN cell that covers the updated ground area and that can take over load of a TN cell covering the updated ground area, and the updated ground area is smaller than or equal to the first target ground area; and
sending third response information to the network management device, wherein the third response information comprises the updated cell information.

24. The method according to claim 23, wherein the updated cell information comprises an identifier of an updated NTN cell.

25. The method according to claim 24, wherein the updated cell information further comprises at least one of the following:
an updated time period in which takeover can be performed; or
an updated quantity of users who can be taken over.

26. The method according to any one of claims 17 to 25, further comprising:
sending eighth request information to the network management device, wherein the eighth request information is used to request to stop load takeover for a second target ground area.

27. A method, comprising:
receiving a request message from a network management device, wherein the request message comprises cell information and is used to request a TN element management device to trigger load migration, and the cell information is information about an NTN cell that covers a ground area and that can take over load of a terrestrial network TN cell covering the ground area; and
triggering migration of the load of the TN cell to the NTN cell based on the request message.

28. The method according to claim 27, wherein the cell information further comprises at least one of the following:
a time period in which takeover can be performed; or
a quantity of users who can be taken over.

29. The method according to claim 27 or 28, wherein the request message comprises second request information, the second request information further indicates a migration area and a migration target, and the ground area is smaller than or equal to the migration area.

30. The method according to claim 27 or 28, further comprising:
before receiving the request message, receiving third request information from the network management device, wherein the third request information indicates a migration area and a migration target, the third request information is used to request the TN element management device to determine migration assistance information associated with the load that is expected to be migrated from the TN cell, and the ground area is smaller than or equal to the migration area;
determining, based on determining of the load that is expected to be migrated from the TN cell, an area from which migration is expected to be performed as the ground area; and
sending second response information to the network management device, wherein the second response information comprises the migration assistance information, and the migration assistance information comprises the ground area.

31. The method according to claim 30, wherein the migration assistance information further comprises a takeover time period.

32. The method according to claim 30 or 31, wherein receiving the request message comprises:
after sending the second response information, receiving fourth request information from the network management device, wherein the fourth request information indicates an identifier of the NTN cell, and the fourth request information is used to request the TN element management device to trigger load migration.

33. The method according to any one of claims 27 to 32, wherein triggering the migration of the load of the TN cell to the NTN cell comprises:
determining a target TN cell that is in the TN cell and for which one or more NTN cells in the NTN cell are configured as a neighboring cell;
determining a quantity of users of the target TN cell in a target takeover time period based on historical load of the target TN cell;
determining a plurality of candidate migration solutions in which load of the target TN cell can be migrated to the NTN cell, wherein the plurality of candidate migration solutions satisfy that the quantity of users of the target TN cell in the target takeover time period is less than or equal to a quantity of users who can be migrated to the one or more NTN cells in the NTN cell; and
selecting a target migration solution from the plurality of candidate migration solutions based on migration benefits corresponding to the plurality of candidate migration solutions.

34. The method according to any one of claims 27 to 33, further comprising:
receiving seventh request information from the network management device, wherein the seventh request information indicates an updated migration area, an updated migration target, and updated cell information, and the seventh request information is used to re-request the TN element management device to trigger load migration; and
re-determining a migration solution based on the seventh request information.

35. The method according to claim 34, wherein the updated cell information comprises an identifier of an updated NTN cell.

36. The method according to claim 35, wherein the updated cell information further comprises at least one of the following:
an updated time period in which takeover can be performed; or
an updated quantity of users who can be taken over.

37. The method according to any one of claims 27 to 36, further comprising:
receiving ninth request information from the network management device, wherein the ninth request information is used to request to stop load migration for a second target ground area; and
re-determining a migration solution based on the ninth request information.

38. A communication device, comprising a processor and a memory storing instructions, wherein when the instructions are executed by the processor, the communication device is enabled to perform the method according to any one of claims 1 to 16, any one of claims 17 to 26, or any one of claims 27 to 37.

39. A computer-readable storage medium, wherein the computer-readable storage medium stores instructions; and when the instructions are executed by a communication device, the communication device is enabled to perform the method according to any one of claims 1 to 16, any one of claims 17 to 26, or any one of claims 27 to 37.

40. A computer program product, wherein the computer program product comprises instructions; and when the instructions are executed by a communication device, the communication device is enabled to perform the method according to any one of claims 1 to 16, any one of claims 17 to 26, or any one of claims 27 to 37.

41. A chip, wherein the chip comprises a processing circuit, and the processing circuit is configured to perform the method according to any one of claims 1 to 16, any one of claims 17 to 26, or any one of claims 27 to 37.
